# EUROPÄISCHE PATENTSCHRIFT

(11) **EP 1 151 428 B1**
(45) Veröffentlichungstag und Bekanntmachung des Hinweises auf die Patenterteilung: **27.11.2002**
(21) Anmeldenummer: 00906267.0
(22) Anmeldetag: 01.02.2000
(51) Int. Cl.: G08G 1/0968, G01C 21/26, G01C 21/34, G08G 1/0965

(54) **VERFAHREN UND VORRICHTUNG ZUR GEWINNUNG VON RELEVANTER VERKEHRSINFORMATION UND ZUR DYNAMISCHEN ROUTENOPTIMIERUNG**
METHOD AND DEVICE FOR OBTAINING RELEVANT TRAFFIC INFORMATION AND DYNAMIC ROUTE OPTIMIZING
PROCEDE ET DISPOSITIF POUR OBTENIR DES RENSEIGNEMENTS UTILES SUR LE TRAFIC ROUTIER ET POUR OPTIMISER UN TRAJET DE MANIERE DYNAMIQUE

(30) Priorität: 01.02.1999 DE 19903909
(43) Veröffentlichungstag der Anmeldung: 07.11.2001
(73) Patentinhaber: Definiens AG., 80331 München (DE)
(72) Erfinder: KIENDL, Robert, D-81541 München (DE); SCHMIDT, Günter, D-80999 München (DE)
(74) Vertreter: Winter, Brandl, Fürniss, Hübner, Röss, Kaiser, Polte Partnerschaft
(86) Internationale Anmeldenummer: EP0000813
(87) Internationale Veröffentlichungsnummer: WO00046777

(56) Entgegenhaltungen:
- WO-A-92/14215
- DE-A- 4 034 681
- DE-A- 19 604 084
- US-A- 4 706 086
- US-A- 5 371 678
- US-A- 5 406 490

## Beschreibung

Die Erfindung bezieht sich auf ein Verfahren und eine Vorrichtung zur Gewinnung von relevanter Verkehrsinformation und zur dynamischen Optimierung einer Route von Fahrzeugen gemäß den Oberbegriffen der Ansprüche 1 bzw. 55, welche einem selbstorganisierenden Verkehrsleitsystem angehören, und insbesondere auf ein Verfahren für ein selbstorganisierendes System zur Verkehrsleitung, Signalisierung von Verkehrsstörungen und Extraktion von Statistikdaten sowie auf ein Verfahren für eine effiziente, zielgerichtete Verbreitung von Drittdaten in einem sich bildenden Informationsnetzwerk.

Bisherige Verfahren oder Vorrichtungen zur Verkehrsleitung stützen sich in großem Umfang auf eine externe, festinstallierte Verkehrserfassung bzw. auf eine zentrale Informationsverarbeitung.

Zur Erhöhung der Rate von Fahrzeugen, welche einen bestimmten Verkehrsabschnitt passieren, und damit zur Erhöhung der mittleren Geschwindigkeit der Fahrzeuge insbesondere bei verstärktem Verkehrsaufkommen, wurden bereits herkömmliche Verkehrsleitsysteme entlang von besonders stark belasteten Verkehrsabschnitten, wie zum Beispiel stark befahrenen Autobahnen usw., fest installiert. Derartige herkömmliche fest installierte Verkehrsleitsysteme besitzen eine Vielzahl von Erfassungsvorrichtungen, die zum Beispiel die Verkehrsdichte, die Geschwindigkeit des Fahrzeugstroms, die Umgebungsbedingungen, wie zum Beispiel Temperatur oder Nebel, usw. erfassen und anhand der jeweiligen Erfassungssignale den Fahrzeugverkehr entlang des vorbestimmten Abschnitts über Anzeigetafeln derart steuern, daß ein gleichmäßiger Verkehrsfluß bei größtmöglicher Geschwindigkeit entsteht.

Nachteilig bei derartigen herkömmlichen Verkehrsleitsystemen ist die feste Installation entlang eines vorbestimmten Streckenabschnitts, wodurch sich außerordentlich hohe Anschaffungskosten ergeben. Darüber hinaus besitzt ein derartiges fest installiertes Verkehrsleitsystem nur eine geringe Flexibilität, da es ausschließlich den Verkehr in relativ kurzen Abschnitten regelt bzw. leitet.

Zur Erhöhung der Flexibilität schlägt die **US-A-4 706 086** ein Kommunikationssystem zwischen einer Vielzahl von Fahrzeugen vor, bei dem Signale und Informationen entsprechend den jeweiligen Fahrzuständen des Fahrzeugs über eine Sende/Empfangseinheit mittels elektromagnetischer Funkwellen übertragen werden.

Ferner ist aus der **US-A-5 428 544** eine Vorrichtung und ein Verfahren zum Signalisieren von lokalen Verkehrsstörungen bekannt, bei dem die Fahrzeugdaten bzw. Fahrzustände des Fahrzeugs, wie zum Beispiel die Geschwindigkeit, die Route und die Richtung über Kommunikationseinrichtungen, gegenseitig übertragen werden. Die Übertragung der jeweiligen Daten auf ein weiteres Fahrzeug erfolgt hierbei auf indirekte Art und Weise über ein entgegenkommendes Kraftfahrzeug.

Ein Verfahren bzw. eine Vorrichtung gemäß den Oberbegriffen der Ansprüche 1 bzw. 55 ist aus der DE-A-40 34 681 bekannt.

Bei den bisherigen Verkehrsleitsystemen werden die Fahrzeugdaten entweder in einem örtlich begrenzten Bereich durch eine festinstallierte Einrichtung erfaßt und sind lediglich lokal verfügbar oder sie werden in einem großen Bereich von einer Mehrzahl von mobilen Einrichtungen erfaßt, aber derart ineffizient weitergeleitet, daß sie ebenfalls lediglich lokal verfügbar sind, wodurch die Planung bzw. Optimierung einer Route von Fahrzeugen über einen lokalen Bereich hinaus unter Berücksichtigung verkehrsrelevanter Größen der gesamten Wegstrecke nicht unterstützt wird. Nicht bekannt hingegen ist eine dynamische Gewinnung von relevanter Verkehrsinformation.

Der Erfindung liegt daher die Aufgabe zugrunde, ein Verfahren und eine Vorrichtung zur dynamischen Gewinnung von relevanter Verkehrsinformation zu schaffen, bei welchen an einem zweiten Ort, der von einem ersten Ort beliebig entfernt sein kann, eine relevante Verkehrsinformation erstellt und effizient an den ersten Ort weitergeleitet wird.

Erfindungsgemäß wird diese Aufgabe durch die Maßnahmen und Merkmale der Ansprüche 1 und 55 gelöst.

Weitere vorteilhafte Ausgestaltungen sind Gegenstand der abhängigen Ansprüche.

Das erfindungsgemäße Verfahren zur dynamischen Gewinnung von relevanter Verkehrsinformation und/oder zur dynamischen Optimierung einer Route eines ersten Fahrzeugs, welches einem selbstorganisierenden Verkehrsinformationssystem und/oder Verkehrsleitsystem angehört, dem weitere Fahrzeuge angehören, beinhaltet die folgenden von dem ersten Fahrzeug durchgeführten Schritte: Erstellen von eigenen Daten auf der Grundlage von fahrzeugeigenen Sensoren und/oder anderen Informationsquellen in dem ersten Fahrzeug; Aussenden von für das erste Fahrzeug oder für andere Fahrzeuge relevanten Daten, was einem Broadcast entspricht; Empfangen von Daten, die von anderen Fahrzeugen gesendet werden; Speichern von Daten, die aus empfangenen und/oder eigenen Daten gewonnen werden; Erstellen und Senden von Anfragen bezüglich Daten, die durch andere Fahrzeuge bereitstellbar sind, was einem Request entspricht; und Weiterleiten von empfangenen Daten durch Wiederaussenden dieser Daten in verarbeiteter oder nicht verarbeiteter Form, was einer Replikation entspricht.

Damit ermöglicht das erfindungsgemäße Verfahren vom Prinzip her ein autarkes selbstorganisierendes Verkehrsinformationsnetzwerk, in welchem die teilnehmenden Fahrzeuge gleichzeitig die benötigte Information generieren, verteilen, bündeln und nutzen.

Das Verfahren arbeitet auf eine besondere Weise skaleninvariant, das heiß fraktalhierarchisch, so daß es bezüglich der Verarbeitungsart und bezüglich des Kommunikationsvolumens, zumindest im Hinblick auf dynamische Routenoptimierung und Signalisierung von Verkehrsstörungen, was einen Sicherheitsaspekt darstellt, keine Rolle spielt, auf welche Distanzgrößenordnung abgezielt wird.

Das Verfahren funktioniert auf Autobahnnetzen ebenso wie in einem Straßennetz einer Großstadt.

Insbesondere skaliert das Kommunkationsvolumen gutartig, das heißt "< n*log n", mit der Gesamtzahl der teilnehmenden Fahrzeuge und der Fläche des Areals.

Trotz der prinzipiellen Automomie des Systems können jedoch auch zentral generierte Informationen nahtlos in das System hineingeroutet werden und auch Informationen aus dem System zum Beispiel zu Statistikzwecken extrahiert und zentral gesammelt werden.

Ein enormer Kostenvorteil, optimale Effizienz hohe Ausfallsicherheit und gleichzeitig ein gebündelter Mehrwert sowie eine einheitliche Benutzerschnittstelle werden deshalb im Vergleich zu bestehenden Verfahren erzielt. Zudem ist dieses System bei hohem Ausstattungsgrad als Sicherheitssystem nutzbar.

Daneben bietet das durch dieses Verfahren entstehende Netzwerk auch eine äußerst effiziente Plattform für die Übertragung von Drittdaten bis hin zu Mobiltelefonie. Auch eine Effektivitätssteigerung des entstehenden Kommunikationsnetzwerks durch die Ausnutzung bzw. die nahtlose Einbindung eines Backbone-Festnetzes ist problemlos möglich.

Insbesondere können das Verfahren und die Vorrichtung der vorliegenden Erfindung die folgenden weiteren Merkmale aufweisen.

Anfragen können von empfangenden Fahrzeugen beantwortet, teilweise beantwortet, weitergeleitet und/oder teilweise weitergeleitet werden, was einem Response und einer Replikation entspricht.

Ein Beantworten von Anfragen und/oder ein Weiterleiten von Anfragen und anderen Daten erfolgt durch Fahrzeuge mit geeignetem/optimalem Informationsstand bzw. mit günstiger/optimaler aktueller Position für eine Weiterleitung, wodurch eine Optimierung von Beantwortung und Weiterleitung erzielt wird.

In den Schritten **[a]** und **[d]** des Verfahrens werden darüber hinaus auch Fahrhistoriendaten durch die Fahrzeuge erstellt, wodurch die Aussagekraft der Daten erhöht wird.

In den Schritten **[b]** und **[c]** des Verfahrens werden eine zu dem ersten Fahrzeug dazugehörige Quellengruppe von Fahrzeugen auf den Empfang von Daten von jeweiligen Fahrzeugen festgelegt, wobei in den empfangenden Fahrzeugen zum Zwecke der Generierung von Quellendaten für die nachfolgenden Schritte die Daten gespeichert, akkumuliert und vorverarbeitet werden können, was einer ersten Quellenbildung entspricht.

Bei der Vorverarbeitung der Quellendaten sind mittlere Geschwindigkeiten, maximale Geschwindigkeiten, Verkehrsdichtemaße, Stau-Sensitivitäten, gebündelte Aktualitätsmaße und/oder gebündelte Relevanz-Maße berechenbar, was einer zweiten Quellenbildung entspricht.

Das Festlegen der Gruppe von Fahrzeugen erfolgt durch Festlegen einer einstellbaren Sendefeldstärke oder Sendereichweite des ersten Fahrzeugs, wodurch eine erste Sendereichweite definiert wird.

Die einstellbare Sendefeldstärke wird derart geregelt, daß im Mittel ein vorbestimmtes Kriterium hinsichtlich einer parametrisierbaren Anzahl von erreichbaren Fahrzeugen erfüllt wird, wodurch eine zweite Sendereichweite definiert wird.

In die Sendefeldstärkenregelung können in die empfangenen Signale einkodierte Positionen und verwendete Sendefeldstärken von benachbarten Fahrzeugen eingehen, wodurch eine dritte Sendereichweite definiert wird.

Die Route des ersten Fahrzeugs wird von dessen momentaner Position zu einem ausgewählten Ziel anhand gespeicherter Wegstreckendaten festgelegt und die Route wird in Wegstreckensegmente unterteilt.

Das erste Fahrzeug kann Anfragen nach Informationen bezüglich einer Befahrbarkeit und sonstigen verkehrsrelevanten Größen auf in Frage kommenden zukünftig zu befahrenden Wegstreckensegmenten senden.

Antworten auf Anfragen des ersten Fahrzeugs an das erste Fahrzeug werden direkt oder per Weiterleitung zurückgeleitet, wobei die Informationen in den Antworten zur opportunen Weiterverwendung auch von übermittelnden Fahrzeugen sowie von Fahrzeugen, die ebenfalls die Antworten empfangen, abgespeichert, akkumuliert und aufbereitet werden können, was einem Caching und einem Verwerten entspricht.

Die Fahrhistoriendaten, die Quellendaten, Zwischenspeicherdaten, die insbesondere die abgespeicherten, akkumulierten und aufbereiteten Informationen enthalten, und Antwortdaten in den Fahrzeugen können jeweils in einer individuellen Kartenstruktur gespeichert werden, welche eine statische globale Kartenstruktur überlagert oder parallel dazu besteht.

Aus Fahrzustandsdaten, Fahrhistoriendaten und/oder Daten, welche durch ein Zusammenwerfen von Fahrdaten mehrerer Fahrzeuge gewonnen werden, können auch neue Kartenstrukturelemente in den individuellen Kartenstrukturdaten erzeugt, verändert oder gelöscht und auch zur externen Nutzung aus dem Verkehrsleitsystem extrahiert werden.

Ein Unterteilen der individuellen Kartenstruktur erfolgt für Zwecke der internen Verarbeitung und Referenzierung in Übertragungssignalen in Wegstreckensegmente, die ein vorbestimmtes Kriterium hinsichtlich einer Länge erfüllen, was einer ersten Kartenrepräsentation entspricht.

Ein Zusammenfassen von Wegstreckensegmenten der individuellen Kartenstruktur erfolgt für Zwecke der internen Verarbeitung und Referenzierung in Übertragungssignalen zu Gruppen und Übergruppen mit jeweils eigener Identifizierung erfolgt, was einer zweiten Kartenrepräsentation bzw. einer Kompression durch Hierarchisierung entspricht.

Ein erstes Berechnen der Route des ersten Fahrzeugs von dessen momentaner Position zu einem ausgewählten Ziel kann anhand statisch gespeicherter oder bereits verfügbarer dynamischer Wegstreckendaten erfolgen, was einem statischen oder einem dynamischen Routing entspricht.

Ein Neuberechnen der Route kann aufgrund geänderter Daten in der individuellen Kartenstruktur zum Zwecke der iterativen Optimierung der Route erfolgen.

Bei der Erstellung von Anfragen kann eine gewünschte Aktualität in die Anfrage einkodiert werden, was einer Aktualisierungsanforderung entspricht.

Ein Beantworten einer Anfrage kann je nach erwünschter Aktualität aus Quellendaten von Fahrzeugen nahe am Zielgebiet der Anfrage oder aus Zwischenspeicherdaten, die insbesondere die abgespeicherten, akkumulierten und aufbereiteten Informationen enthalten, von Fahrzeugen weitab vom Zielgebiet und näher am anfragenden Fahrzeug erfolgen, so daß die Zahl von Anfragenweiterleitungen gering gehalten werden kann, was einer Cache-Nutzung entspricht.

Ein günstiges Fahrzeug aus der Gruppe von Fahrzeugen, welches die Anfrage beantworten und/oder weiterleiten kann, kann durch ein Bewertungsverfahren ermittelt werden, wobei in Abhängigkeit von der Aktualität bzw. einer Relevanz von bereits dem jeweiligen Fahrzeug verfügbaren Daten über betroffene Wegstreckensegmente, der Anzahl von Anfragen, die aufgrund bereits verfügbarer Daten beantwortbar sind, und/oder der Entfernung des jeweiligen Fahrzeugs zum nächsten Wegstreckensegment, dessen Anfrage nicht beantwortbar ist, ein Bewertungsmaß ermittelt wird, was einem ersten Delay-Routing entspricht.

In Abhängigkeit von dem Bewertungsmaß kann eine Verzögerungszeit für die Absendung einer Beantwortung und/oder Weiterleitung festgesetzt werden, die desto kürzer ist, je höher das Bewertungsmaß ist, so daß Fahrzeuge je eher mit dem Senden zum Zuge kommen, je besser das Bewertungsmaß ist, was einem zweiten Delay-Routing entspricht.

Ein bestimmtes Fahrzeug mit einer Sendeabsicht betreffend einer Anfragebeantwortung und/oder Anfrageweiterleitung bezüglich einer bestimmten durch einen Aktions-Code gekennzeichneten Anfrage kann die geplante Absendung stoppen, wenn es ein Signal bezüglich derselben Anfrage mit demselben Aktions-Code von einem anderen bestimmten Fahrzeug empfängt, welches mit kürzerer Verzögerungszeit dem bestimmten Fahrzeug zuvorgekommen ist.

Es erfolgt eine Beurteilung, ob für ein bestimmtes Wegstreckensegment eine Anfrage erstellt werden soll, was einer Berechnung einer ersten Abfragenotwendigkeit entspricht. Dadurch wird das Kommunikationsvolumen verringert.

Die Beurteilung, ob für ein bestimmtes Wegstreckensegment eine Anfrage erstellt werden soll, erfolgt in Abhängigkeit der Entfernung des Wegstreckensegments von einem momentanen Aufenthaltsort des ersten Fahrzeugs, der geschätzten Zeit bis zum Erreichen des Wegstreckensegments, einem Wichtungsfaktor des Wegstreckensegments, einer aus der Vergangenheit bekannten Stauhäufigkeit und/oder der Aktualität bereits verfügbarer Daten über das Wegstreckensegment, was einer Bewertung einer zweiten Abfragenotwendigkeit entspricht.

Übertragene Daten können Informationen bezüglich eines Signaltyps, einer Fahrzeugidentifizierung, der verwendeten Sendefeldstärke, eines Aufenthaltsorts der Fahrzeuge, eines eindeutigen Aktions-Codes sowie einer Liste von Identifizierungen bisher verwendeter Übermittlungsfahrzeuge als History-Liste beinhalten, wodurch erste Informationsinhalte definiert werden.

Übertragene Daten können ferner Informationen bezüglich Wegstreckensegmentidentifizierungen, einer Bewegungsrichtung, eines Anteils eines zurückgelegten Wegstreckensegments, einer mittleren Geschwindigkeit, einer maximalen Geschwindigkeit, der Fahrzeugdichte und/oder einer Aktualität/Zeitmarkierung der Informationen beinhalten, wodurch zweite Informationsinhalte definiert werden.

Ein Zurückleiten einer Beantwortung einer Anfrage kann unter Verwendung der History-Liste erfolgen, was einem ersten Rückleiten bzw. einem Ausnutzen der History-Liste entspricht.

Ein Zurückleiten einer Beantwortung einer Anfrage durch ein Weiterleitungsverfahren kann ferner analog der Hinleitung der Anfrage erfolgen, was einem zweiten Rückleiten bzw. einem erneuten Routing entspricht.

Das erste Fahrzeug erstellt und sendet eine Mehrzahl von Anfragen bezüglich einzelner Wegstreckensegmente, die jeweils einzeln beantwortet und/oder weitergeleitet sowie beantwortet zurückgeleitet werden, oder eine Anfrage bezüglich der Gesamtheit von Wegstreckensegmenten, wobei die Anfrage bezüglich der Gesamtheit von Wegstreckensegmenten eine Mehrzahl von Teilanfragen bezüglich einzelner Wegstreckensegmente beinhaltet, die nacheinander von den Fahrzeugen einer Kette von Übermittlungsfahrzeugen beantwortet bzw. weitergeleitet werden, was einer Kombination von Anfragen entspricht.

Es werden eine oder mehrere Gruppen von Fahrzeugen gebildet, die jeweils über Daten bestimmter benachbarter Wegstreckensegmente verfügen, wobei für jeweilige Fahrzeuge gemeinsame gruppenrelevante Daten derart verfügbar sind, daß eine Anfrage über Daten solcher Gruppen von jedem Fahrzeug der Gruppe beantwortbar ist oder durch wenige Weiterleitungen eine Beantwortung erfolgen kann, was einer ersten Quellenhierarchisierung entspricht.

Aus den Gruppen werden eine oder mehrere übergeordnete Gruppen gebildet, die jeweils über Daten bestimmter benachbarter Wegstreckensegmente verfügen, wobei für die jeweiligen Fahrzeuge gemeinsame übergruppenrelevante Daten derart verfügbar sind, daß eine Anfrage über Daten solcher Übergruppen von jedem Fahrzeug der Übergruppe beantwortbar ist oder durch wenige Weiterleitungen eine Beantwortung erfolgen kann, was einer zweiten Quellenhierarchisierung entspricht.

Fahrzeuge der Gruppe erstellen und senden Daten, die Informationen bezüglich einer Lage, Ausdehnung und minimalen Lebensdauer der Gruppe beinhalten, was einer dritten Quellenhierarchisierung mittels eines Gruppenprotokolls entspricht.

Gruppendaten können dabei mittlere Geschwindigkeiten, maximale Geschwindigkeiten, Fahrzeugdichtemaße, Aktualitäten/Zeitmarkierungen und/oder Informationsrelevanzmaße bezüglich der Gesamtheit der Fahrzeuge der Gruppe beinhalten, was einer vierten Quellenhierarchisierung mittels Gruppendaten entspricht.

Eine Gruppenbildung kann ferner dadurch erfolgen, daß Gruppenbildungswünsche eines oder mehrerer Fahrzeuge oder Untergruppen akkumuliert werden und daß die tatsächliche Gruppenbildung erst bei einer Schwellwertüberschreitung festgelegt wird, was einer fünften Quellenhierarchisierung mittels einer Gruppenbildung entspricht.

Einem Fahrzeug oder einer Gruppe von Fahrzeugen werden externe Daten zur gerichteten oder ungerichteten Weitergabe zugeführt, wobei auch eine Gruppenbildung durch diese externen Daten veranlaßbar ist, was einer Zuführung externer Daten an Fahrzeuge und Gruppen entspricht.

Die externen Daten können Informationen bezüglich einer Stauprognose beinhalten, was einer External Prediction entspricht.

Informationen bezüglich einer Stauprognose oder sonstiger verkehrsrelevanter Größen werden extrahiert und extern gespeichert, wobei zur Gewinnung der relevanten Größen auch eine Gruppenbildung von innerhalb oder außerhalb des Systems veranlaßbar ist, was einer Extraktion von Verkehrsdaten entspricht.

Die externen Daten beinhalten Informationen bezüglich einer Verkehrsanbindung an andere Verkehrsverbunde, wie Bahn-, U-Bahn-, S-Bahnverkehr, Flugverkehr und/oder Schifffahrt, wodurch ein intermodaler Verkehr definiert wird.

Informationen bezüglich einer Stauprognose aufgrund in der Vergangenheit erfaßter und zyklisch auftretender Ereignisse werden aus Fahrzeugdatensignalen generiert und gesendet, wobei zum Zwecke der zyklischen Stauprognose auch eine Gruppenbildung initiierbar ist, was einer Periodical Prediction entspricht.

Informationen bezüglich einer Stauprognose aufgrund von in jüngerer Vergangenheit erfaßter Ereignisse werden aus Fahrzeugdatensignalen durch Extrapolation der Verkehrsflüsse oder Simulation generiert und gesendet, wobei zum Zwecke der simulativen Stauprognose auch eine Gruppenbildung initiierbar ist, was einer Simulative Prediction entspricht.

Informationen bezüglich einer Stauprognose und/oder sonstiger verkehrsrelevanter Größen werden innerhalb einer festzulegenden Gruppe von Fahrzeugen abgelegt und bestehen dort weiter.

Daten bezüglich einer gefährlichen Annäherung des ersten Fahrzeugs an ein anderes dem Verkehrsleitsystem angehörigen Fahrzeugs oder an eine dem Verkehrsleitsystem angehörige Gruppe werden erzeugt und/oder übertragen, wodurch ein Sicherheitssystem definiert wird.

Eine Zurückleitung nicht beantworteter Anfragen erfolgt in Form von speziell markierten Pseudo-Antworten, wodurch eine erste Pseudo-Antwort definiert wird.

Eine Nichtbeantwortung einer weitergeleitetem Anfrage kann ferner dadurch erfaßt werden, daß bei einer Weiterleitung einer Anfrage durch ein bestimmtes Fahrzeug gleichzeitig die Absendung einer Pseudo-Antwort mit einer hohen Delay-Zeit festgelegt wird, wodurch eine zweite Pseudo-Antwort definiert wird.

Die Absendung der Pseudo-Antwort von dem bestimmten Fahrzeug kann dadurch gestoppt werden, daß ein anderes bestimmtes Fahrzeug, welches sich in Reichweite des bestimmten Fahrzeugs befindet, seinerseits die weitergeleitete Anfrage beantwortet oder weiterleitet, was durch das bestimmte Fahrzeug aufgrund eines Aktions-Codes der Anfrage erkennbar ist, wodurch eine dritte Pseudo-Antwort definiert wird.

Informationen werden beim Rücklauf von Antworten auf Anfragen oder bei einer Zwischenspeicherung in Übermittlungsfahrzeugen zusammengefaßt, so daß Daten aus größerer Entfernung von einem Anfrager stärker komprimierbar/gröber auflösbar sind, was einer Integration entspricht.

Ausgesendete Datensignale werden analog der Verarbeitung von Anfragen sowohl entlang eines eindimensionalen Kanals hin zu einem Zielort als auch flächenhaft in ein in das Datensignal einkodiertes weiträumigeres Zielgebiet weitergeleitet, was einer weiteren Integration entspricht.

Datensignale beinhalten Informationen, die aufgrund eines besonderen Ereignisses von einem Fahrzeug erstellt und gerichtet oder ungerichtet gesendet werden, was einem Event-Broadcast entspricht.

Die Fahrzeuge sind Landfahrzeuge für den Straßenoder Schienenverkehr, Wasserfahrzeuge, Luftfahrzeuge oder sonstige mobile bemannte oder unbemannte Einheiten, die sich in einem gemeinschaftlich genutzten Verkehrsraum fortbewegen und die mit einer begrenzt reichweitigen Kommunikationseinrichtung ausstattbar sind.

Fahrzeuge können auch besondere Pseudo-Fahrzeuge sein, die speziell kommunikativen Zweck aufweisen, Datensignale aus dem Verkehrsleitsystem heraus- oder in das Verkehrsleitsystem hineinsenden, Drittdaten einspeisen, nicht unbedingt mobil sein müssen, aber zumindest mit einer kompatiblen Kommunikationseinrichtung ausgestattet sind.

Über ein Pseudo-Fahrzeug oder eine Station wird eine Verbindung zu einem anderen Telekommunikationsnetzwerk hergestellt wird.

Es werden miteinander durch ein externes Kommunikationsnetzwerk verknüpfte Pseudo-Fahrzeuge oder Stationen geschaffen, welche eine günstigere Verbindung zwischen den Fahrzeugen untereinander oder zwischen den Fahrzeugen und einem sich außerhalb des Verkehrsleitsystems befindenden Sender/Empfänger herstellen, wodurch ein Backbone-Netz definiert wird.

Durch die Kommunikationseinrichtungen der Fahrzeuge und/oder der Pseudo-Fahrzeuge/Stationen wird ein Telekommunikationsnetzwerk ausgebildet.

Erfindungsgemäß wird ferner eine Vorrichtung zum Ermitteln und Optimieren einer Route eines ersten Fahrzeugs, welches einem Verkehrsleitsystem angehört, dem weitere Fahrzeuge angehörig sind, geschaffen mit: einer Erfassungsvorrichtung zum Erfassen von zu sendenden lokalen Fahrzeugdaten; einer Sende/Empfangsvorrichtung zum Senden/Empfangen von Funksignalen, die jeweilige zu sendende/empfangende Fahrzeugdaten enthalten; einer Feldstärke-Einstellvorrichtung zur freien Einstellung einer bestimmten Sendefeldstärke bis hin zu einer maximalen Sendefeldstärke; einer Feldstärke-Erfassungsvorrichtung zum Erfassen der Feldstärke der jeweils empfangenen Funksignale; einer Speichervorrichtung zum Speichern von Daten; einer Gruppenfestlegungsvorrichtung, welche auf den Empfang der Fahrzeugdaten der jeweiligen Fahrzeuge eine dem ersten Fahrzeug zugehörige Gruppe festlegt; einer Routenfestlegungs- und -segmentierungsvorrichtung, welche anhand von gespeicherten Wegstreckendaten eine Route des ersten Fahrzeugs von dessen momentaner Position bis zu einem ausgewählten Ziel festlegt und in Wegstrekkensegmente unterteilt; und einer Routenoptimierungseinrichtung, welche eine Anfrage über Fahrzeugdaten, welche Informationen bezüglich der Befahrbarkeit der jeweiligen Wegstreckensegmente beinhalten, an die Gruppe von Fahrzeugen stellt und anhand von auf die Anfrage empfangenen Fahrzeugdaten eine optimierte Route bestimmt. Durch die zuvor beschriebenen Merkmale wird ein Aufbau einer intelligenten Kommunikationsvorrichtung geschaffen.

Ferner kann eine Verzögerungszeitsignalerzeugungsvorrichtung enthalten sein, welche in Abhängigkeit von einem frei festlegbaren Zeitverzögerungswert ein Datensignal erst nach Ablauf der festgelegten Verzögerungszeit absendet, wodurch eine erste Delay-Erzeugung stattfindet.

Desweiteren kann eine Steuervorrichtung enthalten sein, durch welche die Absendung des verzögerten Datensignals vor Ablauf der Verzögerungszeit nachträglich stoppbar ist, wodurch eine zweite Delay-Erzeugung stattfindet.

Die vorliegende Erfindung wird nachstehend anhand von Ausführungsbeispielen unter Bezugnahme auf die Zeichnung näher beschrieben.

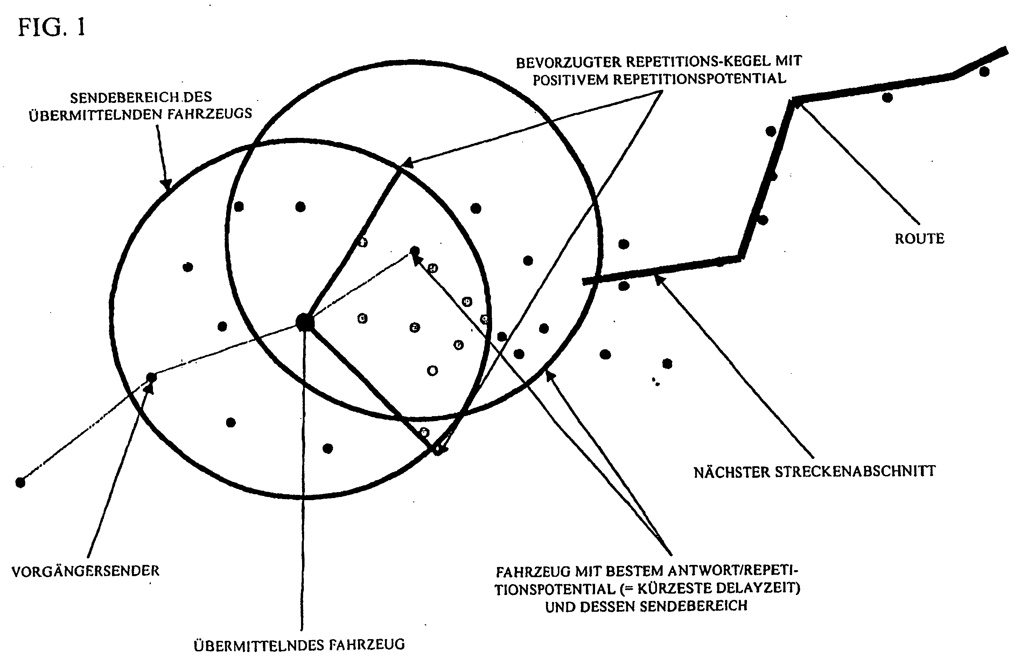

- **Fig. 1**: zeigt eine schematische Darstellung der Durchführung der Kommunikation zwischen Fahrzeugen eines Verkehrsleitsystems gemäß einem Ausführungsbeispiel der vorliegenden Erfindung.

Zur Durchführung des Verfahrens der vorliegenden Erfindung ist ein Fahrzeug ausgestattet mit einer:
- Kommunikationseinheit (Sende/Empfangsvorrichtung) zur Kommunikation auf Fahrzeug-Fahrzeug-Ebene
   Vorzugsweise wird eine digitale gemultiplexte Übertragungsnorm ähnlich wie bei digitalen Mobilfunknetzen verwendet. Die Norm sollte idealerweise ein asynchrones Protokoll fahren. Auf unterer Ebene sollte zweckmäßigerweise ein "Collision-Detection"-Verfahren mit Fehlerkorrektur verwendet werden, wobei dies ähnlich Ethernet ist. Im Prinzip könnte jedoch auch eine analoge Norm mit entsprechenden Korrekturverfahren ausreichen. Die Kommunikationseinheit sollte idealerweise mit einer von einer Rechnereinheit geforderten Sendeleistung von 0 bis zu einer maximalen Sendeleistung von zum Beispiel 5 Watt betrieben werden können.
- Rechnereinheit
   An die Rechnereinheit werden mittlere Anforderungen an Rechengeschwindigkeit und Speicherplatz gestellt. Die Rechnereinheit sollte über ein Kartenmodul, zum Beispiel auf CD-ROM, verfügen.
- Bewegungssensorik bzw. eine Vorrichtung zum Erfassen von Fahrzeugdaten
   Die Bewegungssensorik weist einen Geschwindigkeits- und Richtungssensor, idealerweise ein GPS-Modul, auf. Weitere Sensoren können eingebunden werden.

Die Verfahrensschritte werden insbesondere unter Steuerung der Recheneinheit durchgeführt bzw. veranlaßt.

Grundeinheit der internen Karte bzw. des Kartenmoduls der Rechnereinheit ist ein Streckenabschnitt bzw. ein Wegstreckensegment. Alle Straßenzüge sind in der internen Karte als Zusammensetzungen von Streckenabschnitten dargestellt. Die Verbindungspunkte zwischen Streckenabschnitten werden als Knoten bezeichnet. Abbiegevorschriften, Einbahnstraßen usw. sind als Einschränkungen auf den Streckenabschnitten/Knoten definiert.

Bei dem Verfahren der vorliegenden Erfindung wirken gleichzeitig verschiedene Prozesse zusammen, die im folgenden nacheinander beschrieben werden. Dabei ist eine Anzahl von Parametern sinnvoll zu wählen, was jedoch erst bei einer konkreten Installation des Verfahrens bzw. mit Hilfe einer detaillierten Simulation geschehen kann. Angegebene Parameter sind daher Vorabschätzungen. Die Parameter stellen verkehrsrelevante Größen dar, die neben einer Befahrbarkeit zum Beispiel auch Daten bezüglich der Wettererfassung, wie zum Beispiel Regen oder Temperaturen, Fahrzeugsbetriebszustände, wie zum Beispiel Airbagauslösung, ABS-Aktivierung, Steigungsmessungen usw. sein können.

### Ungerichteter Broadcast / Defaultaktion:

Alle teilnehmenden Fahrzeuge führen "unaufgefordert" eine Defaultaktion durch. Sie senden zum Beispiel in einem bestimmten zeitlichen Abstand von zum Beispiel 2 min ihre Bewegungsdaten als ungerichteten Broadcast bzw. als ungerichtete Sendung "unterster Hierarchiestufe". Die gesendeten Daten umfassen Informationen über die jüngere Fahrgeschichte, also zum Beispiel die mittlere Fahrgeschwindigkeit auf den Streckenabschnitten, die in den letzten 5 min befahren wurden. Alle Fahrzeuge im Umkreis von ungefähr der beabsichtigten Sendereichweite empfangen das Broadcastsignal.

Ein offener Parameter ist hierbei noch die zu verwendende Sendefeldstärke, welche die Sendereichweite bestimmt. Diese ergibt sich aus einem Regelvorgang. Zu Anfang wird eine geeignete Defaultsendestärke benutzt. Die benutzte Sendestärke wird jeweils auch mit in den Broadcast codiert. Jedes Fahrzeug erfährt nun im Laufe der Zeit die Daten von den umgebenden Fahrzeugen. Es weiß dann ungefähr die Fahrzeugdichte bzw. die Dichteverteilung in der Umgebung. Daraufhin kann es seine Sendestärke so abstimmen, daß ungefähr eine vorgegebene Maximalanzahl von Fahrzeugen, wie zum Beispiel 100 Fahrzeuge, mit einem Broadcast erreicht werden kann. Da die verwendete Sendestärke immer mitcodiert ist, kann auch ständig der Zusammenhang zwischen Sendestärke und zu erwartender Sendereichweite abhängig von Umgebungsbedingungen nachjustiert werden, und das unter Umständen sogar richtungsabhängig. Letztlich soll durch die Sendefeldstärkenregelung erreicht werden, daß bezüglich der Kanalauslastung und des konkret verwendeten "Collision-Detection"-Verfahrens entsprechend den Anfordungen der Kommunikationsschicht eine für die Gesamtheit der Fahrzeuge optimale Übertragungsbandbreite zur Verfügung steht. Auch im Sinne eines gutartigen Skalierens des Kommunikationsvolumens, wobei ein Systemzusammenbruch auch bei erhöhter Teilnehmerzahl nicht auftritt, ist es wichtig, daß zum Beispiel im Zentrum einer Großstadt nicht zu viele Fahrzeuge von einem einzelnen Broadcast erreicht werden.

Das vorliegende erfindungsgemäße Verfahren muß also noch keine zu speziellen Anforderungen an die unterste Übertragungsschicht stellen, sondern kann in weiten Bereichen durch Einstellung von wenigen Parametern an ein konkretes Kommunikations-Setup angepaßt werden.

Durch den ungerichteten Broadcast entstehen informationsmäßig (verschmierte) Gruppen bezüglich der Streckenabschnitte. Zum Beispiel "wissen" ungefähr 30 Fahrzeuge über die Bewegungsdaten auf einem bestimmten Autobahnabschnitt oder einem dichtbefahrenden Innenstadt-Streckenabschnitt Bescheid. Alle Informationseinheiten, die übertragen werden, tragen eine Zeitmarke, welche die jeweilige Aktualität kennzeichnet, sowie ein Relevanzmaß, daß kennzeichnet, wie zuverlässig/vollständig die Information ist. Zum Beispiel kann ein Prozentsatz des bereits befahrenen Streckenabschnitts verwendet werden. Aus dieser Bewertung und Akkumulation der Daten von verschiedenen Fahrzeugen ergibt sich somit ein "Bild" von dem gesamten Verkehr, und dieses "Bild" ist verteilt in den Gruppen abgelegt. Es können verschiedene Bewegungsvariablen/parameter akkumuliert werden, zum Beispiel mittlere Fahrgeschwindigkeit/Fahrzeit, maximale Fahrgeschwindigkeit, Verkehrsdichte, Stausensitivität, wobei diese aus einer Langzeitintegration ermittelt werden kann, usw.

### Request:

Der Request arbeitet eng mit der eigentlichen dynamischen Routenplanung zusammen: Ausgangspunkt der dynamischen Routenplanung ist eine statische Routenplanung. Die Rechnereinheit eines Fahrzeugs berechnet sozusagen zunächst konventionell entsprechend der eingebauten Karte, welche vorläufige Daten über maximsle Reisegeschwindigkeiten auf den Streckenabschnitten enthält, ein vorläufige optimale Route.

Für diese aktuell ins Auge gefaßte Route wird nun versucht, herauszufinden, ob die zugrundeliegenden maximalen Reisegeschwindigkeiten und gegebenenfalls auch andere abgeleitete Basisparameter, wie zum Beispiel Benzinverbrauch, Umweltbelastung usw., korrekt sind.

Dazu werden über die Sende/Empfangsvorrichtung des Fahrzeugs für die Streckenabschnitte Anfragen, das heißt Requests, über die Bewegungsdaten abgesetzt. Alle Strekkenabschnitte der Route werden durchgegangen, wobei entschieden wird, ob ein Request für den jeweiligen Strekkenabschnitt überhaupt derzeit erforderlich ist, denn ein Request ist teuer in dem Sinne, daß er ein Kommunikationsvolumen bzw. einen Kommunikationsaufwand verursacht. Es wird gewissermaßen die Wichtigkeit für einen Request des jeweiligen Streckenabschnitts abgeschätzt. Nur wenn die Bewertung einen gewissen Level überschreitet, zum Beispiel in einem normalisierten Bewertungssystem den Wert 1, wird der Streckenabschnitt für den Request vorgemerkt. Die Kriterien für die Abschätzung der Wichtigkeit sind zum Beispiel Entfernung des Streckenabschnitts in der geplanten Route vom jetzigen Standort aus, geschätzte Fahrzeitentfernung des Streckenabschnitts, Wichtigkeit der Straße auf der sich der Streckenabschnitt befindet ("Roadclass") und/oder Aktualität der bereits vorhandenen Daten über den Streckenabschnitt. Wenn bereits Daten mit einer Aktualität von -3 min vorliegen, braucht ein Request bezüglich des betreffenden Streckenabschnitts nicht abgesetzt zu werden.

Durch die Überprüfung der Streckenabschnitte nach diesen Kriterien ergibt sich dann eine Liste von Strekkenabschnitten, für die ein Request abzuschicken ist. Im Request wird auch eine erwünschte Mindestaktualität eingetragen. Zusammenhängende Streckenabschnitte in dieser Liste können dann mit einer üblichen Segmentierungsmethode zusammengefaßt werden, so daß ein gebündelter Request gebildet werden kann. Im Prinzip kann auch ein einziger gebündelter Request für alle Streckenabschnitte in der Liste gebildet werden, der dann während der anschließenden unten beschriebenen Request-Repetition stückweise aufgebrochen bzw. abgearbeitet wird. Darüber hinaus wird der Request mit einem eindeutigen Aktions-Code, der nachstehend detaillierter beschrieben wird und der unter anderem Informationen darüber enthält, wer welche Anfrage beantwortet bzw. weitergeleitet hat, und mit einem auf 0 gesetzten Repetitionszähler versehen, der die Anzahl von Weiterleitungen wiedergibt.

### Requestverarbeitung/Repetition:

Der Request wird nun entsprechend Fig. 1 ausgesendet. Als Sendefeldstärke wird jener Wert genommen, der sich aus dem zuvor beschriebenen Regelmechanismus beim Broadcast ergibt. Der Request wird von allen Fahrzeugen innerhalb des Sendebereichs "gehört". Diese Fahrzeuge nehmen nun eine Bewertung vor. Sie schätzen aus den Ihnen vorliegenden Daten, das heißt aus dem Broadcast oder dem nachstehend beschriebenen Cachesignal, ein Antwortpotential bzw. -vermögen und ein Repetitionspotential bzw. -vermögen, (→ Weiterübermittlung des Request) ab. Dabei werden Kriterien berücksichtigt, wie zum Beispiel: wie gut können die Requests beantwortet werden (Aktualität, Relevanz, wie es zuvor beschrieben worden ist); wie viele Requests (Anzahl bzw. Prozentsatz der Streckenabschnitte) können beantwortet werden, nur wenn eine gewisser Schwellenwert erreicht wird, ist das Gesamtantwortpotential größer als 0, damit keine zu kleinen Aufsplittungen des Requests forciert werden; und wie gut steht das Fahrzeug in der Richtung hin auf den nächsten Streckenabschnitt, dessen Request nicht beantwortet werden kann.

Aus dieser Bewertung ergibt sich nun ein Ranking-Wert, zum Beispiel von 0 bis 1, welcher dem Antwort- bzw. Repetitionspotential entspricht. Aus dem Ranking-Wert wird eine Delay-Zeit errechnet. Dabei ergibt eine hoher Ranking-Wert eine kurze Delay-Zeit, und Bewertungen, die nicht nur ein Repetitionspotential, sondern auch ein Antwortpotential größer 0 haben, ergeben grundsätzlich eine kürzere Delay-Zeit, als Bewertungen, die nur ein Repetitionspotential haben. Die Parameter sind derart zu wählen, daß möglichst nur Fahrzeuge in einem Kegel in Richtung auf das nächste Routensegment ein Potential größer 0 bekommen, wie es in Fig. 1 dargestellt ist. Anschließende Repetitionen können dann untereinander gehört werden.

Sowohl die geplante Repetition mit Requests bezüglich der restlichen Streckenabschnitte als auch die geplante Antwort werden zusammen mit der berechneten Delay-Zeit in ein Senderegister gestellt bzw. abgespeichert. Dadurch entsteht ein Stapel von "Sendeabsichten".

Dieser Stapel wird dann im Laufe der Zeit durchgearbeitet. Wenn die jeweilige Delay-Zeit abgelaufen ist, wird das entsprechende Paket versendet. Wenn jedoch in der Zwischenzeit eine Antwort oder eine Repetition mit demselben Aktions-Code und mindestens genauso großem Repetitionszähler eingetroffen ist, so ist ein anderes Fahrzeug der beabsichtigten Sendeaktion zuvorgekommen. Offensichtlich hatte dieses Fahrzeug ein höheres oder vergleichbares Antwort/Repetitionspotential. Die entsprechenden Einträge aus dem Stapel werden dann gelöscht (→ Selektion des Max. Fittest). Wenn ein Paket mit demselben Aktions-Code und niedrigerem Repetitionszähler eintrifft, so wird das Paket ignoriert. Das führt dazu, daß ineffizente sich verselbstständigende Requestzyklen vernichtet werden. Jedes Fahrzeug kann auch eine Liste mit jüngeren Request-Aktions-Codes führen, anhand derer nichtoptimal herumirrende Request-Ketten von der Repetition bzw. Beantwortung abgehalten werden und so recht bald vernichtet werden.

Es ergibt sich nun sukzessive eine Weiterleitung und Teilbeantwortung von Requests. Im ungünstigsten Falle müßte ein Request so die gesamte Route in Sprüngen von ungefähr dem mittleren Senderadius ablaufen.

### Rücklauf der Information, das heißt Answer:

Auf einen Request folgt irgendwann eine Beantwortung bzw. Answer, meist in Form einer Teilbeantwortung. Es wird nun versucht, die Antwort auf demselben Weg zum Empfänger zurückzurouten, auf der der Request eingetroffen ist. Während der Request-Phase wird bei jeder Repetition ein History-Stapel von übermittelnden Fahrzeugen im Request-Protokoll erweitert. Dabei wird jeweils die Fahrzeug-ID bzw. Fahrzeug-Identifizierung in den Stapel eingetragen. Anhand dieses ID-Stapels kann während des Answer-Zyklus immer genau dasjenige Fahrzeug, das am Ende dieser Liste steht, eineindeutig die Answer-Repetition übernehmen und dabei die eigene ID vom History-Stapel nehmen. Es wird hierbei davon ausgegangen, daß die Fahrzeugbewegungen wesentlich langsamer sind, als die Gesamtlaufzeiten der Kommunikation, so daß sich das Muster der Sendebereiche beim Answer gegenüber dem Request kaum geändert hat. Es würde also nur sehr selten der Fall auftreten, daß beim Zurücklaufen der Antwort ein Fahrzeug im History-Stapel nicht mehr erreichbar ist. In einem derartigen Fall kann die Antwort jedoch ohne besondere Gegenmaßnahmen schadlos verlorengehen. Beim nächsten Request-Generierungs-Zyklus des anfragenden Fahrzeugs wird dies wegen der nicht aktuellen Daten für die betroffenen Streckenabschnitte auffallen und bevorzugt schnell ein neuer Request gestartet werden.

Im Prinzip könnte die Antwort aber auch nach demselben aufwendigen Verfahren wie beim Request geroutet werden, also rein durch Repetition hin auf den Quellort des Request, mit jeweiliger Bewertung durch ein Repetitionspotential, Delay-Routing usw. wie es zuvor geschildert worden ist.

Beim Answer-Routing können wieder dieselben, schon für den Broadcast und den Request verwendeten Sendefeldstärken verwendet werden. Notfalls kann die Sendefeldstärke zwecks größerer Sicherheit bezüglich der Erreichbarkeit auch leicht erhöht sein.

Bei alleiniger Verwendung des beschriebenen Request/Answer-Mechanismus würde das Verfahren im Prinzip schon wirksam werden. Jedoch würde das Kommunkationsvolumen unnötig hoch sein und vor allem nicht gutartig mit den Fahrstreckenlängen, der Größe des Straßennetzes und der Anzahl der Fahrzeuge skalieren. Für die Übermittlung nichtkohäsiver Drittdaten, zum Beispiel Telefonie oder Car-Internet, würde das beschriebene Routing allerdings schon die Hauptbasis sein.

Das erfindungsgemäße Verfahren zeichnet sich nun noch besonders durch die im folgenden beschriebenen hierarchisierend wirksamen Mechanismen aus.

### Caching:

Beim Zurücklaufen der angefragten Information über die Streckenabschnitte wird die Information auch von den übermittelnden Fahrzeugen sowie allen Fahrzeugen, die auch davon hören, in einen speziellen als Cache ausgezeichneten Bereich der individuellen Karte abgelegt. Wenn nun weitere Requests von anderen Fahrzeugen eintreffen und die Aktualität der Daten im Cache ausreicht, um den Request zu beantworten, braucht der Request nicht mehr repetiert zu werden, sondern kann direkt aus dem Cache beantwortet werden. Dieser Mechanismus wirkt wiederum selbststabilisierend, da gerade bei hohem Staupotential, hohen Verkehrsdichten und damit großem Kommunikationsaufwand eine große Zahl gleichartiger Requests anfallen, die dann nur noch sehr selten bis zum Zielgebiet laufen müssen.

Bei Speicherknappheit, obwohl dies bei den vergleichweise geringen Informationsmengen und den großen zur Verfügung stehenden Speichern heutzutage kein Problem darstellt, kann ein Fahrzeug jeweils veraltete Daten aus dem Cache entfernen, und es kann, wenn bekannt ist, daß auch benachbarte Fahrzeuge die Information speichern, die Aufnahme der Daten in den Cache mit einer Wahrscheinlichkeit kleiner als 100% vorgenommen werden.

### Integration:

Überschüssige Rechenkapazität der Rechnereinheit kann dazu verwendet werden, die Informationen im Cache zu Sinneinheiten zusammenzufassen. Zum Beispiel könnten Informationen über Städte oder Stadtteile, Umgehungsstraßen, lange Autobahnstrecken, Ansammlungen von Grenzübergängen zu gebündelten Informationen zusammengefaßt werden. Ein Beispiel hierfür ist: Zähfließender Verkehr auf dem gesamten "Mittleren Ring" in München. Zum einen kann durch die zusätzliche Beantwortung von entsprechenden Requests mit derartigen gebündelten Informationen eine ineffiziente Request-Iteration verhindert werden. Andererseits können derartige durch Integration generierten Informationseinheiten aber nicht nur in die Routenplanung einfließen, sondern zum Beispiel auch dem Fahrer auf einem Display oder per Sprachausgabe usw. als sinnvolle zusammengefaßte Hintergrundinformation präsentiert werden. Das Integrationsverfahren kann zum Beispiel zusätzliche vordefinierte Bereichsmarkierungen in der eingebauten Karte, wie zum Beispiel Städteabgrenzungen, Autobahnstreckenzüge, usw., verwenden.

Dynamische Gruppenbildung auf höheren Hierarchiestufen:

Der zuvor beschriebene ungerichtete Broadcast erreicht nur Fahrzeuge im Bereich einer mittleren Sendereichweite. Wenn nun jedoch eine Information über bestimmte Streckenabschnitte oder Streckenzüge oder andere Integrationseinheiten, wie es zuvor beschrieben worden ist, häufig durch Requests angefordert wird, können die übermittelnden Fahrzeuge veranlassen, daß die Fahrzeuge, die sich auf diesen Strecken befinden, von sich aus Daten in einer weiteren Umgebung verbreiten, bevorzugt in die Richtung, aus der die meisten Requests kommen. Fahrzeuge, welche sich auf derart häufig angefragten Integrationseinheiten bewegen, werden also zu Gruppen zusammengefaßt, wobei dies zunächst auf einer ersten Hierarchiestufe geschieht. Wie alle anderen Informationen sind auch derartige Gruppengebilde zunächst von temporärer Natur. Sie zerfallen von sich aus mit einer bestimmten Zeitkonstante, wenn der Auslöser für die Gruppenbildung, wie zum Beispiel ein starkes Requestvolumen, wegfällt. Die Gruppen sind an den Ort, das heißt an Streckenzüge, Stadteile, Autobahnsegmente, usw., und nicht an bestimmte Fahrzeuge gebunden. Das heißt, wenn Fahrzeuge neu in eine Streckenabschnittsagglomeration einfahren, über die eine Gruppenbildung stattgefunden hat, werden sie Teil der Gruppe. Durch vorhergehende Gruppenbroadcasts, die auch jenseits der Gruppengrenzen zu empfangen sind, erfahren derartige Fahrzeuge in der Regel schon vor Betreten eines derartigen Streckenabschnitts von der Existenz der Gruppe. Bei Verlassen des Gruppengebiets geben die Fahrzeuge auch Ihre Gruppenzugehörigkeit auf und versenden/Replizieren keine Gruppenbroadcasts mehr.

Das Initialisieren einer Gruppe erfolgt durch Fahrzeuge, die Requests aufsplitten bzw. bei den Requests zusammenlaufen. Solche Fahrzeuge sind in der Regel nicht Teil der Gruppe, da sie meist die Gruppen "von außen" sehen (→ eine Art von Gruppensprecher). Zur Generierung einer Gruppe wird ein Generierungsrequest an die betroffenen Streckenabschnitte geschickt (Routing, wie es zuvor beschrieben worden ist). Die Generierung einer Gruppe erfolgt aus Stabilitätsgründen nun auch nicht direkt beim ersten Initialisierungsversuch durch ein Gruppensprecherfahrzeug. vielmehr wird bei dem betroffenen Fahrzeug ein "Zähler" für einen bestimmten Gruppenwunsch hochgezählt. Dieser Zähler würde ohne weitere Aktionen mit einer bestimmten Zeitkonstante wieder verfallen. Erst wenn mehrere Anforderungen (→ Schwellenwert) zur Gruppenbildung eintreffen, auch von verschiedenen Fahrzeugen und aus verschiedenen Richtungen, und die "Gruppenwünsche" sich hinreichend überlappen, wird eine Gruppe das erste Mal etabliert. Eine derartige Initialisierung einer Gruppe kann von einem späteren Gruppenteilnehmer aus erfolgen, bei dem als erstes der Zähler den Schwellenwert überschreitet. Ein erster Gruppenbroadcast kann dazu auf Protokollebene verwendet werden.

Gruppendaten sind das Gebiet der Gruppenquellfahrzeuge, sowie das Zielgebiet zur Verbreitung der Gruppeninformation, zum Beispiel eine Keulenform in eine Richtung, aus der viele Requests eintreffen.

### Technik des Gruppenbroadcast/Area-Broadcast:

Jedes Fahrzeug der Gruppe sendet mit einer bestimmten zeitlichen Wahrscheinlichkeit statistisch ein Broadcastsignal aus. Jeder Broadcast trägt einen bestimmten Actions-Code, anhand dessen die Broadcast-Replikation koordiniert wird. Fahrzeuge, die sich im Randbereich des Empfangsbereichs aufhalten, führen nach demselben Verfahren, wie es zuvor bei der Request-Repetition beschrieben worden ist, eine Replikation des Protokolls durch, nur hat der Area-Broadcast kein lokales punktförmiges Zielgebiet, sondern breitet sich flächig bis an die Grenzen des Gruppenzielgebiets aus.

In der Weiterführung des Verfahrens können nun Hierarchien von Gruppen entstehen. Dies kann einerseits in der Art geschehen, daß Fahrzeuge, die Quellendaten liefern, gleichzeitig an mehreren immer großräumigeren Gruppen teilnehmen, wobei Gruppen gleicher Hierarchiestufe sich auch überlappen können (→ "induzierte durchmischte Hierarchien"). Dieser Prozeß kann andererseits in der Form geschehen, daß gebündelte Gruppendaten selbst wieder als Informationsbausteine für Übergruppen dienen (→ "echte Hierarchien"). Das Zusammenfassen von Gruppen zu Übergruppen erfolgt wiederum, wie es zuvor beschrieben worden ist, durch in der Regel externe Informationsübermittlerfahrzeuge, welche meist von außen aufgrund der Routing-Tätigkeit die Nützlichkeit einer Zusammenfassung der Gruppen "erkennen". Wichtig ist, daß die Gruppen immer dynamisch erzeugt werden und gegebenenfalls mit der Zeit auch von selbst wieder zerfallen, wenn der Beweggrund für die Gruppenbildung wegfällt.

### Wide-Area-Broadcast:

Gemäß dem zuvor beschriebenen Gruppen-Broadcast-Verfahren können auch beliebige andere Informationen flächenmäßig in einem beliebigen Zielgebiet verbreitet werden. Derartige eventartige Informationen können sein: besondere Ereignisse, wie zum Beispiel Unfälle (Auslösen eines Airbag, usw.) und Hilferufe; Suchprotokolle, mittels denen der Aufenthaltsort eines Kommunikationsteilnehmers ermittelt werden kann, um anschließend einen Kommunikationskanal zu errichten; in das Netz eingespielte Drittdaten, wie zum Beispiel mehr oder weniger lokale Verkehrsnachrichten und Stauvorhersagen; und vieles mehr.

### External Prediction / Intrinsic Prediction:

Das bisher beschriebene Verfahren liefert sehr effizient aktuelle Verkehrsdaten. Bei der Planung von längeren Reiserouten ist es jedoch oft interessant, ob zum Beispiel der Verkehr in 200 km Entfernung in 2 Stunden immer noch so aussieht wie er sich zum aktuellen Zeitpunkt darstellt. Solche Verkehrsvorhersagen sind insbesondere für staugefährdete Autobahnabschnitte interessant. Wie es zuvor bereits angedeutet worden ist, kann eine Lösung des Problems sein, daß Verkehrsnachrichtendienste von außen Drittdaten, wie zum Beispiel Stauprognosen, per Wide-Area-Broadcast in das Netz einspielen. Ein andere Lösung ist, daß die Prognosegenerierung im Netz zum Teil automatisch geschieht.

Ausgangspunkt ist in beiden Fällen, daß für derartige gefährdete "prognosewürdige" Verkehrsbereiche Gruppen nach dem zuvor beschriebenen Muster eingerichtet werden. Denn nur Gruppen können dauerhaft ortsgebundene Daten vor Ort, zum Beispiel durch iterative Übergabe zwischen Fahrzeugen, halten.

Im Falle einer externen Prediction kann von der Prediction-Versendestelle aus die Bildung einer Gruppe in dem Gebiet veranlaßt werden, für das eine Stau- oder sonstige Prediction gemacht werden soll, und anschließend die Prediction an die Gruppe übergeben werden. Das örtliche Laufmuster eines derartigen Gruppenbildungs- oder Predictiontelegramms bzw. -datenpakets sieht dann so ähnlich aus wie ein Atompilz. Zunächst läuft es wie bei einem Request entlang einem Korridor zum Zielgebiet und breitet sich dort dann flächenmäßig aus. Die Gruppe bleibt dann mindestens solange bestehen, wie die Laufzeit der Prediction es verlangt. Die Prediction-Sendestelle ist dann sozusagen der Hauptgruppensprecher. Bei einem Request in den Gruppenbereich hinein kann dann in der Antwort bzw. Answer, wie sie zuvor beschrieben worden ist, auch die Prediction mitgesendet werden.

### Automatische Prognose:

Bei Staubildung kommt es zunächst zur Bildung geeigneter Gruppen, da bei Staus die Kriterien, welche zuvor zur Generierung von Gruppen genannt worden sind, automatisch erfüllt sind. Wenn nun in einem Gebiet wiederholt Staus, wie zum Beispiel im Tagesrhythmus auftreten, und dies während der Lebensdauer der Gruppe auffällt, so kann zunächst die weitere Mindestlebensdauer der Gruppe hochgesetzt werden, um sozusagen dieser Sache noch länger nachzugehen. Wenn sich nun der Verdacht einer periodischen Störung erhärtet (die erforderliche einfache Mustererkennung zur Detektierung von peridischen Störungen kann in allen Fahrzeugen ablaufen; grundsätzlich gilt das zuvor genannte Muster der "Wunschakkumulierung": erst wenn mehrfach der Wunsch zur "Benennung" einer periodischen Störung kommt, bekommt dieses Wissen in der Gruppe faktische Gültigkeit), wird das Wissen darüber als "Periodical Prediction" in den Gruppenspeicher aufgenommen und gleichzeitig die Mindestlebensdauer/Verfallszeitkonstante der Gruppe hochgesetzt (zum Beispiel auf das Fünffache der Periodendauer der Störung). Es kann jedoch sein, daß eine normale Gruppenlebensdauer nicht ausreicht, um zum ersten Mal den Verdacht einer periodischen Störung zu erhärten, zum Beispiel weil die Gruppen nicht die nächste verkehrsarme Nacht überleben würde. Abgesehen davon, daß so etwas dann von einer externen Providerstelle initialisiert werden könnte und im Gegensatz zu den vorhergehenden Ausführungen nicht weiter gepflegt werden müßte, gibt es auch automatische Möglichkeiten:
1. Simple Möglichkeit: Gruppenmindestlebensdauern werden bei Gruppenbildung mit einer gewissen Wahrscheinlichkeit manchmal höher angesetzt als normal, also zum Beispiel länger als einen Tag. Dies würde dann irgendwann zur Ingangsetzung der Periodical Prediction ausreichen.
2. Effektive und wohl bessere Möglichkeit: Jedes Fahrzeug behält in einem nicht aktiv wirksamen Langzeitgedächtnis Wissen über vergangene Gruppenmitgliedschaften. Einige solche Fahrzeuge, wie zum Beispiel Pendler usw., kommen dann sicherlich bei der nächsten oder übernächsten, usw., Periode wieder im selben Gebiet in einen periodischen Stau. Derartige Fahrzeuge erkennen dann die zeitliche Koinzidenz von Verkehrsstörungen und können dann zumindest auf Verdacht die Verlängerung der Gruppenlebensdauer bewirken. Oder aber sie können bei entsprechender "Wunschakkumulierung" ziemlich direkt gegebenenfalls die Einrichtung einer Periodical Prediction durchführen. Dieses Verfahren des Langzeitgedächtnisses löst auch das Problem, wenn schon existente Periodical Predictions oder sonstige ortsgebundene Gruppendaten zum Beispiel eine Nacht mit so geringem Verkehrsaufkommen überleben müssen, daß die iterative Übergabe der Gruppendaten abreißt. Im weiteren Sinne kann also durch das Langzeitgedächntis das Überleben einer Gruppe gesichert werden, die für einen kurzen Zeitraum keine Mitglieder mehr hat.
3. Ausnutzung einer erreichbaren durchgehend laufenden nachstehend beschriebenen Festnetz-Backbone-Station, sofern eine solche zur Verfügung steht.

### Zusammenspiel der Kommunikation mit der Routenplanung:

Wenn sich aus einem Request-Zyklus ergibt, daß die der Routenplanung zugrundeliegenden Bewegungsparameter der Streckenabschnitte von den bisherigen Kartendaten abweichen, wie zum Beispiel mittlere/maximale Fahrgeschwindigkeit niedriger, dann werden diese durch den Request oder auch Broadcast erhaltenen Bewegungsparameter in die individuelle Karte eingetragen, die sozusagen die eingebaute Karte, zum Beipsiel auf CDROM, überlagert oder neben dieser besteht. Daraufhin errechnet ein "Schnellster-Weg-Algorithmus" erneut eine Route. Diese Route kann sich von der alten Route unterscheiden. Wenn sich die Route von der alten Route unterscheidet, wird sich der Request-Zyklus für die neuen noch unbekannten/nicht mehr ausreichend aktuellen Streckenabschnitte wiederholen. Andernfalls ist die momentan geplante Route vorläufig in Ordnung.

Ein Verbesserung des Verfahrens wird dadurch erreicht, daß gleich von Anfang an für ein Set von alternativen Routen der Request-Zyklus gestartet wird.

Streng mathematisch ist diese Vorgehensweise nur richtig, wenn die Request/Broadcastdaten niedrigere Geschwindigkeiten als die der eingebauten Karte ergeben. Jedoch ist dies der Normalfall. Umgekehrt gelagerte Fälle, zum Beispiel wenn eine Geschwindigkeitsbeschränkung aufgehoben wird, können jedoch auch im Laufe der Zeit durch folgendes Verfahren verarbeitet werden: Wenn ein derartiger Fall wiederholt auftritt, wird er im Netz durch ein Wide-Area-Broadcast, wie er nachstehend beschrieben wird, verbreitet und in einem Karten-Update-Speicherbereich abgelegt, der die CD-ROM-Karte überlagert. Im weitesten Sinn kann ein derartiger Vorgang zum "Kartenlernen", das heißt zur Aufnahme von relevanten Daten in die Karte, verwendet werden.

Der Vorgang des Kartenlernens wird nachstehend detaillierter beschrieben. Wenn Fahrzeuge auf Strecken unterwegs sind, welche nicht in der bestehenden Karte verzeichnet sind, oder sich der Verdacht ergibt, daß sich Parameter der Strecken geändert haben, wobei diese Parameter zum Beispiel ein Einbahnstraßenstatus, Geschwindigkeitsbeschränkungen, ein Verschwinden von Strecken usw. sind, können aus Fahrzustandsdaten diesbezüglich neue Kartenstrukturelemente oder Parameter oder Vorstufen von diesen von den Fahrzeugen in der individuellen Karte oder einer vorläufigen individuellen Karte verzeichnet werden, um dadurch eine automatische Kartengenerierung bzw. Kartenupdates zu erhalten. Da die Generierung derartiger Daten durch einzelne Fahrzeuge und einzelne Events jedoch in der Regel instabil ist, kann zum Beispiel die Bildung von zuvor beschriebenen persistenten Quellengruppen zu dem Zweck veranlaßt werden, daß die Daten mehrerer Fahrzeuge und Daten über längere Zeitdauern hinweg zusammengeworfen werden. Aus diesen aggregierten Daten kann eine zuverlässigere Datenstruktur bzw. ein Kartenupdate erfolgen. Vorläufige und ausgereifte gelernte Kartenstrukturdaten können ebenso wie gewöhnliche dynamische Fahrzustandsdaten von den Fahrzeugen bzw. Quellengruppen, zum Beispiel durch Abruf, zur Verfügung gestellt werden oder auch aktiv über das verwendete Kommunikationsnetzwerk verbreitet werden. Auch eine externe Nutzung, wie zum Beispiel die Gewinnung von Kartenrohdaten oder Kartendaten, für das Erstellen von Karten außerhalb des Systems ist analog einer zuvor beschriebenen Extraktion von Statistikdaten möglich. Durch die lückenlose Sicht auf den Verkehrszustand, welche durch das Zusammenwerfen nahezu aller Einzelbeiträge der Fahrzeuge möglich ist, können bestimmte Daten mit einer sehr hohen Aussagekraft und Aktualität bereitgestellt werden, die weit über das hinausgehen, was mit gewöhnlichen Formen der Kartenerstellung, zum Beispiel aus Vermessung, Luftbildern, usw., möglich ist.

Der gesamte Routenplanungs- und Request-Zyklus läuft ständig während der gesamten Fahrt ab. Daraus ergibt sich eine zusätzliche Dynamik. Zu jedem Zeitpunkt kann also der Fahrer aufgrund aktuell bestmöglichen Wissens mit einer optimalen Routenplanung versorgt werden.

Wenn keine Daten über Streckenabschnitte erhalten werden, ist davon auszugehen, daß so wenige Fahrzeuge in dem betroffenen Gebiet unterwegs sind, daß offensichtlich die Strecken frei sind. Folgende Annahme ist also eine Grundregel des Verfahrens: Wenn keine Daten über einen Streckenabschnitt zur Verfügung stehen, ist anzunehmen, daß der Streckenabschnitt frei ist. Oder aus dem entgegengesetzten Blickwinkel ausgedrückt, es wird folgender selbststabilisierender Effekt ausgeübt: dort, wo aufgrund erhöhter Verkehrsdichte mit zähfließendem Verkehr zu rechnen ist, verbessert sich automatisch auch die Kommunkationssituation.

### Drittdaten:

Sende- und Empfangseinrichtungen, über welche Drittdaten in das System eingespeist bzw. daraus extrahiert werden, werden als Pseudo-Fahrzeug aufgefaßt und besitzen in der Regel die Eigengeschwindigkeit 0. Die Art, wie derartige Pseudo-Fahrzeuge in den Kommunikationsablauf eingebunden werden, unterscheidet sich nicht prinzipiell von gewöhnlichen Fahrzeugen. Ein Beispiel für eine Drittdatenübermittlung wäre zum Beispiel eine Nachfrage eines Fahrers, der von Nürnberg nach München auf der A9 unterwegs ist, nach einer geeigeneten S-Bahn-Anschlußverbindung in München von einem Park+Ride-Bahnhof zum Marienplatz. Die Datenübermittlung würde analog zu einem Request von dem anfragenden Fahrzeug zu einem bekannten Ort laufen, an dem ein entsprechender Informationsprovider eine Netzstation hat.

Derartige Pseudo-Fahrzeuge können ferner zum Beispiel auch Lichtsignalanlagen mit einer kompatiblen Kommunikationseinrichtung sein, so daß aufgrund des möglichen Informationszugriffs auch verkehrsabhängige Schaltzeitbeeinflussungen möglich sind bzw. daß umgekehrt Verkehrssteuerinformationen an die Fahrzeuge weitergegeben werden und damit eine bessere Routenoptimierung ermöglichen. Ferner können derartige als aktive Stationen wirkende Pseudo-Fahrzeuge als unterstützende Kommunikatoren bei der Informationsweitergabe, Informationsverarbeitung und/oder der Netzwerkabdeckung zum Beispiel bei noch geringem Ausstattungsgrad wirksam werden.

### Backbone-Festnetz:

Als besondere "Pseudo-Fahrzeuge" sind Backbone-Stationen denkbar, welche unter sich eine schnelle Festnetzverbindung haben. Dadurch ergibt sich ein Backbone-Festnetz, das eine langreichweitige Kommunikation insbesondere dann abkürzen kann, wenn die Informationsart von eher nichtkohäsiver Art ist (→ Information, bei der es sich nicht so sehr lohnt, diese entsprechend der zuvor beschriebenen Philosophie ohnehin auf vielen Zwischenstationen abzulegen (cachen), wie zum Beispiel die nachstehend genannte Telefonie. Zu betonen ist noch einmal, daß ein derartiges Backbone-Netz kein wesentlicher Bestandteil des Verfahrens ist. Die Backbone-Stationen haben zum Beispiel auch nicht wie bei einem Mobilfunknetz für eine möglichst lückenfreie Netzabdeckung zu sorgen, sondern sind wirklich nur eine Option zur Beschleunigbarkeit von Kommunikation. Nutzbringend ist ein Backbone-Netz besonders dann, wenn ein hohes Volumen an Drittdaten-Übertragung anfällt. Backbone-Stationen können dann ganz gezielt und sparsam nach und nach da eingefügt werden, wo das Kommunikationsvolumen an ein Limit laufen würde.

Zur Technik des Backbone-Routings: Die Position von Backbone-Stationen wird per Wide-Area-Broadcast regelmäßig aber vergleichsweise sehr selten bekanntgegeben. Neu in den Verkehr eintretende Fahrzeuge können die Informationen über derartige Backbone-Positionen jederzeit per Request von Nachbarfahrzeugen aus relativ kurzer Entfernung besorgen. Wenn eine Information an einer Backbone-Station vorbeiläuft und diese Station erkennt, daß das weitere Routing der Information über das Backbone-Netz günstiger ist, sendet sie zunächst mit der geringstmöglichen Delayzeit, wie es zuvor beschrieben worden ist, ein besonderes Annihilation-Telegramm als Ersatz für das zuvor beschriebene Repetition-Telegramm aus, wobei unter Telegramm ein Paket weitergereichter Daten zu verstehen ist. Dieses Annihilation-Telegramm bewirkt wie ein Repetitions-Telegramm, daß andere Fahrzeuge ihre eventuelle Absicht stoppen, das Informationspaket im normalen Fahrzeug-Fahrzeug-Netz weiterzurouten. Gegebenenfalls kann das Annihilation-Telegramm auch als Area-Broadcast über einen Bereich etwas größer als der Senderadius ausgeführt werden, um eine sichere Eliminierung des Routingvorgangs im normalen Netz zu erreichen. Das Informationspaket wird dann an den geeignetsten Endknoten im Backbone-Netz übermittelt und dort wieder in das Fahrzeug-Fahrzeug-Netz nach der gewöhnlichen Methode eingespeist.

### 1-zu-1 Datenverbindung/Telefonie:

Eine besondere Art von Drittdatenübermittlung erfolgt über eine dauerhafte gerichtete Verbindung zwischen zwei durch eine ID, eine Telefonnummer usw. benannten Teilnehmern. Hierzu ist es zunächst erforderlich, daß der Teilnehmer, der die Verbindung aufnehmen will, den Kommunikationspartner im Netz auffindet. Hierzu gibt es eine Reihe von Möglichkeiten, die auch kombiniert werden können:
1. Bei Vorhandensein eines Backbone-Netzwerks: Ein Zentralrechner oder mehrere verteilte Rechner im Backbone-Netz können aus allen Broadcasts, Requests, Answers und sonstigen Telegrammen, die über Backbone-Stationen hinweglaufen, die Sender- und Empfänger-IDs sowie deren Position entnehmen und ein "Fuzzy-Telefonbuch". d.h. ein Telefonbuch mit unscharfen bzw. nichtgesicherten Einträgen, führen, in dem die ungefähren Aufenthaltsorte der Fahrzeuge/Teilnehmer verzeichnet sind. Diese Telefonbücher müssen nicht 100% richtig sein. Daraus können nun anfragende Kommunikationspartner eine Schätzung für die Position des anderen Partners entnehmen.
2. Es wird hier vorausgesetzt, daß ein ungefährer Aufenthaltsort des Partners vorhanden ist, entweder durch Nachschauen in einem Fuzzy-Telefonbuch, durch Schätzungen aufgrund des gewöhnlichen Aufenthaltsgebiets des Zielfahrzeugs, das heißt einer Heimatregion, oder durch manuelle Eingabe. Dann wird an ein Zielgebiet im Bereich dieses Orts ein Such-Broadcast geschickt, der dem zuvor beschriebenen "Atompilz"-Broadcast entspricht. Wenn sich der Gesuchte meldet, ist die Verbindung hergestellt. Wenn sich der Gesuchte nicht meldet, können zunächst andere in Frage kommende kleine Suchbereiche angefragt werden oder die Suchbereiche immer weiter ausgedehnt werden. Im ungünstigsten Fall müßte dann das gesamte Netzgebiet mit einem Wide-Area-Broadcast abgesucht werden.
3. Alle Fahrzeuge führen in einem nichtbenötigten Speicherbereich ein weiteres Langzeitgedächtnis über Fahrzeug-IDs von verbeilaufenden Telegrammen. Such-Broadcasts können dann oft wesentlich früher einen Hinweis in die richtige Richtung geben.
4. Alle Fahrzeuge gehören zu einer besonderen Heimatgruppe in dem Sinne, daß die Fahrzeuge größere Ortswechsel jeweils durch einen gerichteten Punkt-Broadcast dieser Heimatgruppe mitteilen. Die Heimatgruppen können entweder tatsächlich in einer gewöhnlichen Gruppe in der Nähe des Heimatorts des Fahrzeugs etabliert sein, oder aber von einer Backbone-Station oder sonstwo verwaltet werden. Heimatgruppen sind sozusagen verläßliche Orte, an denen der näherungsweise momentane Aufenthaltsort eines Fahrzeugs nachgefragt werden kann.

Wenn die Aufenthaltsorte der Verbindungspartner untereinander nun bekannt sind, muß ein dauerhafter Verbindungskanal aufgebaut werden. Ähnlich wie bei dem zuvor beschriebenen Answer-Verfahren wird als erster Verbindungskanal nun die History-Liste von Übermittlungsfahrzeugen genommen, die bei der Kontaktaufnahme entstanden ist. Diese History-Liste wird als erste Verbindungs-Liste genommen. Durch das zielgerichtete direkte Abspringen der in der Verbindungs-Liste enthaltenen Fahrzeuge in beiden Richtungen kann eine effiziente Übermittlung großer Datenmengen ohne den aufwendigen zuvor beschriebenen, bei dem Request oder Area-Broadcast verwendeten Delay-Mechanismus erfolgen. Probleme gibt es bei drohendem Verbindungsabriß durch die Bewegung der übermittelnden Fahrzeuge und der kommunizierenden Fahrzeuge. Dieses Problem wird durch folgende Technik gelöst:
1. Beim Springen der Daten von Fahrzeug zu Fahrzeug, werden immer auch die Positionen der sendenden Fahrzeug mit übermittelt. Dadurch erkennen die übermittelnden Fahrzeuge, während der Verbindungskanal steht und ständig benutzt wird, wann der Abstand zwischen zwei Verbindungsfahrzeugen so groß zu werden droht, daß die Verbindung abreißt. Wenn diese Gefahr droht, leiten die beiden betroffenen Verbindungsfahrzeuge rechtzeitig ein lokales Neuverknüpfungsverfahren ein. Sie suchen unter sich eine sichere Verbindung über ein Zwischenfahrzeug. Das kann durch ein ganz normale zuvor beschriebene Request-Methode unter Umständen unter Vorgabe einer künstlich erniedrigten Sendefeldstärke von zum Beispiel -20% geschehen, um einen besonders sicheren Kanal zu finden. Dieses Zwischenfahrzeug wird dann beim nächsten Routing auf den Verbindungsstrecken in die Verbindungsliste eingefügt.
2. Ständig wird auch während des Verbindungs-Routings anhand der Positionen der Verbindungspositionen überprüft, ob sich der Abstand von Fahrzeug-Trippeln soweit verringert hat, daß ein Verbindungsfahrzeug aus der Verbindungsliste herausgenommen werden kann. Dadurch wird verhindert, daß bei länger stehenden Verbindungen zu ineffiziente Verbindungskorridore entstehen.
3. In größeren Zeitabständen wird völlig unabhängig vom bestehenden Verbindungskanal/korridor per Request von den beiden Kommunikationspartnern ein neuer optimaler Verbindungskanal gesucht. Die dann erhaltene neue Verbindungsliste kann dann ab sofort verwendet werden.

## Patentansprüche

1. Verfahren zur dynamischen Gewinnung von relevanter Verkehrsinformation und/oder zur dynamischen Optimierung einer Route eines ersten Fahrzeugs, welches einem selbstorganisierenden Verkehrsinformationssystem und/oder Verkehrsleitsystem angehört, dem weitere Fahrzeuge angehören, mit den folgenden von dem ersten Fährzeug durchgeführten Schritten:
**[a]** Erstellen von eigenen Daten auf der Grundlage von fahrzeugeigenen Sensoren und/oder anderen Informationsquellen in dem ersten Fahrzeug;
**[b]** Aussenden von für das erste Fahrzeug oder für andere Fahrzeuge relevanten Daten;
**[c]** Empfangen von Daten, die von anderen Fahrzeugen gesendet werden;
**[d]** Speichern von Daten, die aus empfangenen und/oder eigenen Daten gewonnen werden; und
**[e]** Weiterleiten von empfangenen Daten durch Wiederaussenden dieser Daten in verarbeiteter oder nicht verarbeiteter Form,
***gekennzeichnet durch*** den folgenden Schritt:
**[f]** Erstellen und Senden von Anfragen bezüglich Daten, die **durch** andere Fahrzeuge bereitstellbar sind.

2. Verfahren nach Anspruch 1, ***dadurch gekennzeichnet,* *daß*** Anfragen von empfangenden Fahrzeugen beantwortet, teilweise beantwortet, weitergeleitet und/oder teilweise weitergeleitet werden.

3. Verfahren Anspruch 2, ***dadurch gekennzeichnet, daß*** ein Beantworten von Anfragen und/oder ein Weiterleiten von Anfragen und anderen Daten durch Fahrzeuge mit geeignetem/optimalem Informationsstand bzw. mit günstiger/optimaler aktueller Position für eine Weiterleitung erfolgt.

4. Verfahren nach Anspruch 2 oder 3, ***dadurch gekennzeichnet, daß*** in den Schritten **[a]** und **[d]** auch Fahrhistoriendaten durch die Fahrzeuge erstellt werden.

5. Verfahren nach Anspruch 4, ***dadurch gekennzeichnet, daß*** in den Schritten **[b]** und **[c]** eine zu dem ersten Fahrzeug dazugehörige Quellengruppe von Fahrzeugen auf den Empfang von Daten von jeweiligen Fahrzeugen festgelegt wird, wobei in den empfangenden Fahrzeugen zum Zwecke der Generierung von Quellendaten für die nachfolgenden Schritte die Daten gespeichert, akkumuliert und vorverarbeitet werden.

6. Verfahren nach Anspruch 5, ***dadurch gekennzeichnet, daß*** bei der Vorverarbeitung der Quellendaten mittlere Geschwindigkeiten, maximale Geschwindigkeiten, Verkehrsdichtemaße, Stau-Sensitivitäten, gebündelte Aktualitätsmaße und/oder gebündelte Relevanz-Maße berechenbar sind.

7. Verfahren nach Anspruch 5 oder 6, ***dadurch gekennzeichnet, daß*** das Festlegen der Gruppe von Fahrzeugen durch Festlegen einer einstellbaren Sendefeldstärke oder Sendereichweite des ersten Fahrzeugs erfolgt.

8. Verfahren nach Anspruch 7, ***dadurch gekennzeichnet, daß*** die einstellbare Sendefeldstärke derart geregelt wird, daß im Mittel ein vorbestimmtes Kriterium hinsichtlich einer parametrisierbaren Anzahl von erreichbaren Fahrzeugen erfüllt wird.

9. Verfahren nach Anspruch 8, ***dadurch gekennzeichnet, daß*** in die Sendefeldstärkenregelung in die empfangenen Signale einkodierte Positionen und verwendete Sendefeldstärken von benachbarten Fahrzeugen eingehen.

10. Verfahren nach einem der Ansprüche 5 bis 9, ***dadurch gekennzeichnet, daß*** die Route des ersten Fahrzeugs von dessen momentaner Position zu einem ausgewählten Ziel anhand gespeicherter Wegstreckendaten festgelegt wird und die Route in Wegstreckensegmente unterteilt wird.

11. Verfahren nach Anspruch 10, ***dadurch gekennzeichnet, daß*** das erste Fahrzeug Anfragen nach Informationen bezüglich einer Befahrbarkeit und sonstigen verkehrsrelevanten Größen auf in Frage kommenden zukünftig zu befahrenden Wegstreckensegmenten sendet.

12. Verfahren nach Anspruch 10, ***dadurch gekennzeichnet, daß*** Antworten auf Anfragen des ersten Fahrzeugs an das erste Fahrzeug direkt oder per Weiterleitung zurückgeleitet werden, wobei die Informationen in den Antworten zur opportunen Weiterverwendung auch von übermittelnden Fahrzeugen sowie von Fahrzeugen, die ebenfalls die Antworten empfangen, abgespeichert, akkumuliert und aufbereitet werden.

13. Verfahren nach Anspruch 12, ***dadurch gekennzeichnet, daß*** die Fahrhistoriendaten, die Quellendaten, Zwischenspeicherdaten, die insbesondere die abgespeicherten, akkumulierten und aufbereiteten Informationen enthalten, und Antwortdaten in den Fahrzeugen jeweils in einer individuellen Kartenstruktur gespeichert werden, welche eine statische globale Kartenstruktur überlagert oder parallel dazu besteht.

14. Verfahren nach Anspruch 13, ***dadurch gekennzeichnet, daß*** aus Fahrzustandsdaten, Fahrhistoriendaten und/oder Daten, welche durch ein Zusammenwerfen von Fahrdaten mehrerer Fahrzeuge gewonnen werden, auch neue Kartenstrukturelemente in den individuellen Kartenstrukturdaten erzeugbar, veränderbar oder löschbar sind und auch zur externen Nutzung aus dem Verkehrsleitsystem.extrahierbar sind.

15. Verfahren nach Anspruch 13 oder 14, ***dadurch gekennzeichnet, daß*** ein Unterteilen der individuellen Kartenstruktur für Zwecke der internen Verarbeitung und Referenzierung in Übertragungssignalen in Wegstrekkensegmente erfolgt, die ein vorbestimmtes Kriterium hinsichtlich einer Länge erfüllen.

16. Verfahren nach Anspruch 15, ***dadurch gekennzeichnet, daß*** ein Zusammenfassen von Wegstreckensegmenten der individuellen Kartenstruktur für Zwecke der internen Verarbeitung und Referenzierung in Übertragungssignalen zu Gruppen und Übergruppen mit jeweils eigener Identifizierung erfolgt.

17. Verfahren nach einem der Ansprüche 13 bis 16, ***dadurch gekennzeichnet, daß*** ein erstes Berechnen der Route des ersten Fahrzeugs von dessen momentaner Position zu einem ausgewählten Ziel anhand statisch gespeicherter oder bereits verfügbarer dynamischer Wegstrekkendaten erfolgt.

18. Verfahren nach Anspruch 17, ***dadurch gekennzeichnet, daß*** ein Neuberechnen der Route aufgrund geänderter Daten in der individuellen Kartenstruktur zum Zwecke der iterativen Optimierung der Route erfolgt.

19. Verfahren nach einem der Ansprüche 12 bis 18, ***dadurch gekennzeichnet, daß*** bei der Erstellung von Anfragen eine gewünschte Aktualität in die Anfrage einkodiert wird.

20. Verfahren nach.Anspruch 19, ***dadurch gekennzeichnet, daß*** ein Beantworten einer Anfrage je nach erwünschter Aktualität aus Quellendaten von Fahrzeugen nahe am Zielgebiet der Anfrage oder aus Zwischenspeicherdaten, die insbesondere die abgespeicherten, akkumulierten und aufbereiteten Informationen enthalten, von Fahrzeugen weitab vom Zielgebiet und näher am anfragenden Fahrzeug erfolgt.

21. Verfahren nach Anspruch 19 oder 20, ***dadurch gekennzeichnet, daß*** ein günstiges Fahrzeug aus der Gruppe von Fahrzeugen, welches die Anfrage beantworten und/oder weiterleiten kann, durch ein Bewertungsverfahren ermittelt wird, wobei in Abhängigkeit von der Aktualität bzw. einer Relevanz von bereits-dem jeweiligen Fahrzeug verfügbaren Daten über betroffene Wegstreckensegmente, der Anzahl von Anfragen, die aufgrund bereits verfügbarer Daten beantwortbar sind, und/oder der Entfernung des jeweiligen Fahrzeugs zum nächsten Wegstreckensegment, dessen Anfrage nicht beantwortbar ist, ein Bewertungsmaß ermittelt wird.

22. Verfahren nach Anspruch 21, ***dadurch gekennzeichnet, daß*** in Abhängigkeit von dem Bewertungsmaß eine Verzögerungszeit für die Absendung einer Beantwortung und/oder Weiterleitung festgesetzt wird, die desto kürzer ist, je höher das Bewertungsmaß ist, so daß Fahrzeuge je eher mit dem Senden zum Zuge kommen, je besser das Bewertungsmaß ist.

23. Verfahren nach Anspruch 22, ***dadurch gekennzeichnet, daß*** ein bestimmtes Fahrzeug mit einer Sendeabsicht betreffend einer Anfragebeantwortung und/oder Anfrageweiterleitung bezüglich einer bestimmten durch einen Aktions-Code **gekennzeichneten** Anfrage die geplante Absendung stoppt, wenn es ein Signal bezüglich derselben Anfrage mit demselben Aktions-code von einem anderen bestimmten Fahrzeug empfängt, welches mit kürzerer Verzögerungszeit dem bestimmten Fahrzeug zuvorgekommen ist.

24. Verfahren nach einem der Ansprüche 18 bis 23, ***dadurch gekennzeichnet, daß*** eine Beurteilung erfolgt, ob für ein bestimmtes Wegstreckensegment eine Anfrage erstellt werden soll.

25. Verfahren nach Anspruch 24, ***dadurch gekennzeichnet, daß*** die Beurteilung, ob für ein bestimmtes Wegstrekkensegment eine Anfrage erstellt werden soll, in Abhängigkeit der Entfernung des Wegstreckensegments von einem momentanen Aufenthaltsort des ersten Fahrzeugs, der geschätzten Zeit bis zum Erreichen des Wegstrekkensegments, einem wichtungsfaktor des Wegstreckensegments, einer aus der Vergangenheit bekannten Stauhäufigkeit und/oder der Aktualität bereits verfügbarer Daten über das Wegstreckensegment erfolgt.

26. Verfahren nach einem der Ansprüche 10 bis 25, ***dadurch gekennzeichnet, daß*** übertragene Daten Informationen bezüglich eines Signaltyps, einer Fahrzeugidentifizierung, der verwendeten Sendefeldstärke, eines Aufenthaltsorts der Fahrzeuge, eines eindeutigen Aktions-Codes sowie einer Liste von Identifizierungen bisher verwendeter Übermittlungsfahrzeuge als History-Liste beinhalten.

27. Verfahren nach einem der Ansprüche 10 bis 26, ***dadurch gekennzeichnet, daß*** übertragene Daten Informationen bezüglich Wegstreckensegmentidentifizierungen, einer Bewegungsrichtung, eines Anteils eines zurückgelegten Wegstreckensegments, einer mittleren Geschwindigkeit, einer maximalen Geschwindigkeit, der Fahrzeugdichte und/oder einer Aktualität/Zeitmarkierung der Informationen beinhalten.

28. Verfahren nach Anspruch 27, ***dadurch gekennzeichnet, daß*** ein Zurückleiten einer Beantwortung einer Anfrage unter Verwendung der History-Liste erfolgt.

29. Verfahren nach Anspruch 26 oder 27, ***dadurch gekennzeichnet, daß*** ein Zurückleiten einer Beantwortung einer Anfrage durch ein Weiterleitungsverfahren analog der Hinleitung der Anfrage erfolgt.

30. Verfahren nach einem der Ansprüche 10 bis 29, ***dadurch gekennzeichnet, daß*** das erste Fahrzeug eine Mehrzahl von Anfragen bezüglich einzelner Wegstreckensegmente, die jeweils einzeln beantwortet und/oder weitergeleitet sowie beantwortet zurückgeleitet werden, oder eine Anfrage bezüglich der Gesamtheit von Wegstrekkensegmenten erstellt und sendet, wobei die Anfrage bezüglich der Gesamtheit von Wegstreckensegmenten eine Mehrzahl von Teilanfragen bezüglich einzelner Wegstreckensegmente beinhaltet, die nacheinander von den Fahrzeugen einer Kette von Übermittlungsfahrzeugen beantwortet bzw. weitergeleitet werden.

31. Verfahren nach einem der Ansprüche 10 bis 30, ***dadurch gekennzeichnet, daß*** eine oder mehrere Gruppen von Fahrzeugen gebildet werden, die jeweils über Daten bestimmter benachbarter Wegstreckensegmente verfügen, wobei für jeweilige Fahrzeuge gemeinsame gruppenrelevante Daten derart verfügbar sind, daß eine Anfrage über Daten solcher Gruppen von jedem Fahrzeug der Gruppe beantwortbar ist oder durch wenige Weiterleitungen eine Beantwortung erfolgen kann.

32. Verfahren nach Anspruch 31, ***dadurch gekennzeichnet, daß*** aus den Gruppen eine oder mehrere übergeordnete Gruppen gebildet werden, die jeweils über Daten bestimmter benachbarter Wegstreckensegmente verfügen, wobei für die jeweiligen Fahrzeuge gemeinsame übergruppenrelevante Daten derart verfügbar sind, daß eine Anfrage über Daten solcher Übergruppen von jedem Fahrzeug der Übergruppe beantwortbar ist oder durch wenige Weiterleitungen eine Beantwortung erfolgen kann.

33. Verfahren nach Anspruch 31 oder 32, ***dadurch gekennzeichnet, daß*** Fahrzeuge der Gruppe Daten erstellen und senden, die Informationen bezüglich einer Lage, Ausdehnung und minimalen Lebensdauer der Gruppe beinhalten.

34. Verfahren nach einem der Ansprüche 31 bis 33, ***dadurch gekennzeichnet, daß*** Gruppendaten mittlere Geschwindigkeiten, maximale Geschwindigkeiten, Fahrzeugdichtemaße, Aktualitäten/Zeitmarkierungen und/oder Informationsrelevanzmaße bezüglich der Gesamtheit der Fahrzeuge der Gruppe beinhalten.

35. Verfahren nach einem der Ansprüche 31 bis 34, ***dadurch gekennzeichnet, daß*** eine Gruppenbildung dadurch erfolgt, daß Gruppenbildungswünsche eines oder mehrerer Fahrzeuge oder Untergruppen akkumuliert werden und daß die tatsächliche Gruppenbildung erst bei einer Schwellwertüberschreitung festgelegt wird.

36. Verfahren nach einem der Ansprüche 10 bis 35, ***dadurch gekennzeichnet, daß*** einem Fahrzeug oder einer Gruppe von Fahrzeugen externe Daten zur gerichteten oder ungerichteten Weitergabe zugeführt werden, wobei auch eine Gruppenbildung durch diese externen Daten veranlaßbar ist.

37. Verfahren nach Anspruch 36, ***dadurch gekennzeichnet, daß*** die externen Daten Informationen bezüglich einer Stauprognose beinhalten.

38. Verfahren nach Anspruch 36 oder 37, ***dadurch gekennzeichnet, daß*** Informationen bezüglich einer Stauprognose oder sonstiger verkehrsrelevanter Größen extrahiert und extern gespeichert werden, wobei zur Gewinnung der relevanten Größen auch eine Gruppenbildung von innerhalb oder außerhalb des Systems veranlaßbar ist.

39. Verfahren nach einem der Anspruch 36 bis 38, ***dadurch gekennzeichnet, daß*** die externen Daten Informationen bezüglich einer Verkehrsanbindung an andere Verkehrsverbunde, wie Bahn-, U-Bahn-, S-Bahnverkehr, Flugverkehr und/oder Schifffahrt, beinhalten.

40. Verfahren nach einem der Ansprüche 10 bis 39, ***dadurch gekennzeichnet, daß*** Informationen bezüglich einer Stauprognose aufgrund in der Vergangenheit erfaßter und zyklisch auftretender Ereignisse aus Fahrzeugdatensignaien generiert und gesendet werden, wobei zum Zwecke der zyklischen Stauprognose auch eine Gruppenbildung initiierbar ist.

41. Verfahren nach einem der Ansprüche 10 bis 40, ***dadurch gekennzeichnet, daß*** Informationen bezüglich einer Stauprognose aufgrund von in jüngerer Vergangenheit erfaßter Ereignisse aus Fahrzeugdatensignalen durch Extrapolation der Verkehrsflüsse oder Simulation generiert und gesendet werden, wobei zum Zwecke der simulativen Stauprognose auch eine Gruppenbildung initiierbar ist.

42. Verfahren nach einem der Ansprüche 10 bis 41, ***dadurch gekennzeichnet, daß*** die Informationen bezüglich einer Stauprognose und/oder sonstiger verkehrsrelevanter Größen innerhalb einer festzulegenden Gruppe von Fahrzeugen abgelegt werden und dort weiterbestehen.

43. Verfahren nach einem der Ansprüche 10 bis 42, ***dadurch gekennzeichnet, daß*** Daten bezüglich einer gefährlichen Annäherung des ersten Fahrzeugs an ein anderes dem Verkehrsleitsystem angehörigen Fahrzeugs oder an eine dem Verkehrsleitsystem angehörige Gruppe erzeugt und/oder übertragen werden.

44. Verfahren nach einem der vorhergehenden Ansprüche,
***dadurch gekennzeichnet, daß*** eine Zurückleitung nicht beantworteter Anfragen in Form von speziell markierten Pseudo-Antworten erfolgt.

45. Verfahren nach Anspruch 44, ***dadurch gekennzeichnet, daß*** eine Nichtbeantwortung einer weitergeleitetem Anfrage dadurch erfaßt wird, daß bei einer Weiterleitung einer Anfrage durch ein bestimmtes Fahrzeug gleichzeitig die Absendung einer Pseudo-Antwort mit einer hohen Delay-Zeit festgelegt wird.

46. Verfahren nach Anspruch **45,** ***dadurch gekennzeichnet, daß*** die Absendung der Pseudo-Antwort von dem bestimmten Fahrzeug dadurch gestoppt wird, daß ein anderes bestimmtes Fahrzeug, welches sich in Reichweite des bestimmten Fahrzeugs befindet, seinerseits die weitergeleitete Anfrage beantwortet oder weiterleitet, was durch das bestimmte Fahrzeug aufgrund eines Aktions-Codes der Anfrage erkennbar ist.

47. Verfahren nach einem der vorhergehenden Ansprüche, ***dadurch gekennzeichnet, daß*** Informationen beim Rücklauf von Antworten auf Anfragen oder bei einer Zwischenspeicherung in Übermittlungsfahrzeugen zusammengefaßt werden, so daß Daten aus größerer Entfernung von einem Anfrager stärker komprimierbar/gröber auflösbar sind.

48. Verfahren nach einem der vorhergehenden Ansprüche, daß ausgesendete Datensignale analog der Verarbeitung von Anfragen sowohl entlang eines eindimensionalen Kanals hin zu einem Zielort als auch flächenhaft in ein in das Datensignal einkodiertes weiträumigeres Zielgebiet weitergeleitet werden.

49. Verfahren nach einem der vorhergehenden Ansprüche, ***dadurch gekennzeichnet, daß*** Datensignale Informationen beinhalten, die aufgrund eines besonderen Ereignisses von einem Fahrzeug erstellt und gerichtet oder ungerichtet gesendet werden.

50. Verfahren nach einem der vorhergehenden Ansprüche, ***dadurch gekennzeichnet, daß*** die Fahrzeuge Landfahrzeuge für den Straßen- oder Schienenverkehr, Wasserfahrzeuge, Luftfahrzeuge oder sonstige mobile bemannte oder unbemannte Einheiten sind, die sich in einem gemeinschaftlich genutzten Verkehrsraum fortbewegen und die mit einer begrenzt reichweitigen Kommunikationseinrichtung ausstattbar sind.

51. Verfahren nach einem der vorhergehenden Ansprüche, ***dadurch gekennzeichnet, daß*** Fahrzeuge auch besondere Pseudo-Fahrzeuge sein können, die speziell kommunikativen Zweck aufweisen, Datensignale aus dem Verkehrsleitsystem heraus- oder in das Verkehrsleitsystem hineinsenden, Drittdaten einspeisen, nicht unbedingt mobil sein müssen, aber zumindest mit einer kompatiblen Kommunikationseinrichtung ausgestattet sind.

52. Verfahren nach Anspruch 51, ***dadurch gekennzeichnet, daß*** über ein Pseudo-Fahrzeug oder eine Station eine Verbindung zu einem anderen Telekommunikationsnetzwerk hergestellt wird.

53. Verfahren nach Anspruch 51 oder 52, ***dadurch gekennzeichnet, daß*** miteinander durch ein externes Kommunikationsnetzwerk verknüpfte Pseudo-Fahrzeuge oder Stationen geschaffen werden, welche eine günstigere Verbindung zwischen den Fahrzeugen untereinander oder zwischen den Fahrzeugen und einem sich außerhalb des Verkehrsleitsystems befindenden Sender/Empfänger herstellen.

54. Telekommunikationsnetzwerk, ***dadurch gekennzeichnet, daß*** es ein Verfahren nach einem der Ansprüche 51 bis 53 durchführt und durch die Kommunikationseinrichtungen der Fahrzeuge und/oder der Pseudofahrzeuge ausgebildet ist.

55. Vorrichtung zum Ermitteln und Optimieren einer Route eines ersten Fahrzeugs, welches einem Verkehrsleitsystem angehört, dem weitere Fahrzeuge angehörig sind, mit:
einer Erfassungsvorrichtung zum Erfassen von zu sendenden lokalen Fahrzeugdaten;
einer Sende/Empfangsvorrichtung zum Senden/Empfangen von Funksignalen, die jeweilige zu sendende/empfangende Fahrzeugdaten enthalten; und
einer Speichervorrichtung zum Speichern von Daten;
***gekennzeichnet durch***:
eine Feldstärke-Einstellvorrichtung zur freien Einstellung einer bestimmten Sendefeldstärke bis hin zu einer maximalen Sendefeldstärke;
eine Feldstärke-Erfassungsvorrichtung zum Erfassen der Feldstärke der jeweils empfangenen Funksignale;
eine Gruppenfestlegungsvorrichtung, welche auf den Empfang der Fahrzeugdaten der jeweiligen Fahrzeuge eine dem ersten Fahrzeug zugehörige Gruppe festlegt;
eine Routenfestlegungs- und -segmentierungsvorrichtung, welche anhand von gespeicherten Wegstreckendaten eine Route des ersten Fahrzeugs von dessen momentaner Position bis zu einem ausgewählten Ziel festlegt und in Wegstreckensegmente unterteilt; und
eine Routenoptimierungseinrichtung, welche eine Anfrage über Fahrzeugdaten, welche Informationen bezüglich der Befahrbarkeit der jeweiligen Wegstreckensegmente beinhalten, an die Gruppe von Fahrzeugen stellt und anhand von auf die Anfrage empfangenen Fahrzeugdaten eine optimierte Route bestimmt.

56. Vorrichtung nach Anspruch 55, ***gekennzeichnet durch*** eine Verzögerungszeitsignalerzeugungsvorrichtung, welche in Abhängigkeit von einem frei festlegbaren Zeitverzögerungswert ein Datensignal erst nach Ablauf der festgelegten Verzögerungszeit absendet.

57. Vorrichtung nach Anspruch 55 oder 56, ***gekennzeichnet durch*** eine.Steuervorrichtung, **durch** welche die Absendung des verzögerten Datensignals vor Ablauf der Verzögerungszeit nachträglich stoppbar ist.

## Claims

1. Method of dynamically acquiring relevant traffic information and/or of dynamically optimising a route of a first vehicle, forming part of a self-organising traffic information system and/or traffic-routing system to which other vehicles belong, comprising the following steps effected by the first vehicle:
[a] generating on-board data on the basis of on-board vehicle sensors and/or other information sources in the first vehicle;
[b] transmitting data relevant to the first vehicle or to other vehicles;
[c] receiving data transmitted by other vehicles;
[d] storing data acquired from received data and/or from on-board data; and
[e] forwarding received data by re-routing this data in processed or in non-processed form,
***characterised by*** the following step:
[f] creating and transmitting queries relating to data which can be provided other vehicles.

2. Method as claimed in claim 1, ***characterised in that*** queries are answered, partially answered, re-routed and/or partially re-routed by receiving vehicles.

3. Method as claimed in claim 2, ***characterised in that*** queries are answered and/or queries and other data are re-routed by vehicles having appropriate/optimum updated information or in a current position that is conducive to/optimum for onward transmission.

4. Method as claimed in claim 2 or 3, ***characterised in that*** driving history data are also generated by the vehicles during steps [a] and [d].

5. Method as claimed in claim 4, ***characterised in that*** during steps [b] and [c], a source group of vehicles associated with the first vehicle is set up to receive data from respective vehicles, whereupon data is stored, compiled and pre-processed in the receiving vehicles with a view to generating source data for the subsequent steps.

6. Method as claimed in claim 5, ***characterised in that*** average speeds, maximum speeds, traffic density, potential congestion spots, bundled update measurements and/or bundled relevance measurements can be computed during preliminary preparation of the source data.

7. Method as claimed in claim 5 or 6, ***characterised in that*** the group of vehicles is set up by setting an adjustable transmission field strength or transmission range for the first vehicle.

8. Method as claimed in claim 7, ***characterised in that*** the adjustable transmission field strength is controlled so that a predetermined criterion is met relating to a user-definable number of vehicles which can be contacted in the system.

9. Method as claimed in claim 8, ***characterised in that*** the positions and field strengths used, encoded in the received signals, are entered in the transmission field strength control systems of adjacent vehicles.

10. Method as claimed in one of claims 5 to 9, ***characterised in that*** the route of the first vehicle is fixed from its instantaneous position to a selected destination on the basis of stored routing data and the route is divided into route segments.

11. Method as claimed in claim 10, ***characterised in that*** the first vehicle transmits queries to obtain information relating to traffic conditions and other traffic-related variables on relevant route segments to be travelled in future.

12. Method as claimed in claim 10 or 11, ***characterised in that*** answers to queries issued by the first vehicle are returned directly or re-routed to the first vehicle and any information in the responses which might be of further practical use are also stored, compiled and processed by transmitting vehicles as well as vehicles which also receive the answers.

13. Method as claimed in claim 12, ***characterised in that*** the driving history data, source data and buffered data containing the stored, compiled and processed information and response data are stored in the vehicles respectively in an individual map structure, which is superimposed on or operates in parallel with a static global map structure.

14. Method as claimed in claim 13, ***characterised in* *that*** new map structure elements in the individual map structure data can be generated, edited or deleted on the basis of driving status data, driving history data and/or data acquired by compiling driving data from several vehicles, and may also be extracted from the traffic routing system for external use.

15. Method as claimed in claim 13 or 14, ***characterised in that*** the individual map structure is broken down into route segments meeting a predetermined criterion based on a length, with a view to internal processing and reference coding in transmission signals.

16. Method as claimed in claim 15, ***characterised in that*** a separate identification code is assigned respectively to a summary of route segments of the individual map structure with a view to internal processing and reference coding in signals transmitted to groups and primary groups.

17. Method as claimed in one of claims 13 to 16, ***characterised in that*** an initial computation of the route of the first vehicle from its instantaneous position to a selected destination is run on the basis of stored statistical data or dynamic routing data already available.

18. Method as claimed in claim 17, ***characterised in that*** the route is re-computed on the basis of amended data in the individual map structure with a view to optimising the route on an iterative basis.

19. Method as claimed in one of claims 12 to 18, ***characterised in that*** when generating queries, a desired situation update is encoded in the query.

20. Method as claimed in claim 19, ***characterised in that*** a query is answered, depending on the desired situation update, from source data of vehicles close to the destination area of the query or from buffered data specifically containing the stored, compiled and processed information of vehicles far away from the destination area and closer to the querying vehicle.

21. Method as claimed in claim 19 or 20, ***characterised in that*** a vehicle that is well-placed to respond and/or re-route the query within the group of vehicles is detected by an evaluation process, whereupon an evaluation measurement is derived indicating the number of queries which can be answered on the basis of already available data and/or the distance of the respective vehicle from the next route segment whose query can not be answered, depending on how up-to-date or relevant the data available from the respective vehicle is regarding relevant route segments.

22. Method as claimed in claim 21, ***characterised in that*** a time delay for transmitting a response and/or initiating re-routing is set, depending on the evaluation result, which will be shorter the higher the evaluation result is, so that vehicles will join in the transmission earlier, the better the evaluation result.

23. Method as claimed in claim 22, ***characterised in that*** a specific vehicle intending to transmit a response to a query and/or re-route a query relating to a specific query **characterised by** an action code halts the intended transmission if it receives a signal from another specific vehicle relating to the same query with the same action code, which reached the specific vehicle earlier with a shorter time delay.

24. Method as claimed in one of claims 18 to 23, ***characterised in that*** an assessment is run to ascertain whether a query should be generated for a specific route segment.

25. Method as claimed in claim 24, ***characterised in that*** the assessment as to whether a query should be generated for a specific route segment is run depending on the distance of the route segment from an instantaneous stopping point of the first vehicle, the estimated time needed to reach the route segment, a weighting factor of the route segment, a known congestion frequency based on past data and/or current data depending on how up-to-date the route segment information is.

26. Method as claimed in one of claims 10 to 25, ***characterised in that*** transmitted data contains information about a signal type, a vehicle identification code, the transmission field strength used, a stopping location of the vehicle, an unambiguous action code and a list of identification codes of transmitting vehicles used to date.

27. Method as claimed in one of claims 10 to 26, ***characterised in that*** transmitted data contains information about route segment identification codes, a direction of travel, a proportion of a route segment already travelled, an average speed, a maximum speed, the traffic density and/or an indication of the update status/time of the information.

28. Method as claimed in claim 27. ***characterised in that*** a response to a query is returned using the history list.

29. Method as claimed in claim 26 or 27, ***characterised in that*** a response to a query is returned by a routing process similar to that used to send out the query.

30. Method as claimed in one of claims 10 to 29, ***characterised in that*** a plurality of queries relating to individual route segments which have been respectively individually answered and/or re-routed and answered is returned to the first vehicle or a query relating to the route segments in their entirety is generated and transmitted, in which case the query relating to the route segments in their entirety contains a plurality of part-queries relating to individual route segments which are answered or re-routed consecutively by the vehicles in a chain of transmitting vehicles.

31. Method as claimed in one of claims 10 to 30, ***characterised in that*** one or more groups of vehicles are formed, each of which disposes of data for specific adjacent route segments so that common data relevant to the group is available for respective vehicles and a query about data of such groups can be answered by every vehicle in the group or a response can be obtained by a small number of re-routing stages.

32. Method as claimed in claim 31, ***characterised in that*** one or more primary groups are set up from the groups, which respectively dispose of data for specific adjacent route segments so that common data relevant to the group is available to the respective vehicles and a query about data of such primary groups can be answered by every vehicle in the primary group or a response can be obtained by a small number of re-routing stages.

33. Method as claimed in claim 31 or 32, ***characterised in that*** vehicles of the group generate and transmit data containing information relating to a position, dispersion and minimum life expectancy of a group.

34. Method as claimed in one of claims 31 to 33, ***characterised in that*** group data contains average speeds, maximum speeds, vehicle density figures, indications of update status/time and/or a measure of information relevance with regard to all the vehicles of the group.

35. Method as claimed in one of claims 31 to 34, ***characterised in that*** a group is set up by compiling group formation requests by one or more vehicles or subgroups and the actual group is not set up until it has been ascertained that a fixed threshold has been exceeded.

36. Method as claimed in one of claims 10 to 35, ***characterised in that*** external data for specifically directed or non-directed transmission is forwarded to a vehicle or a group of vehicles and a group can also be set up on the basis of these external data.

37. Method as claimed in claim 36, ***characterised in that*** the external data contain information relating to a congestion forecast.

38. Method as claimed in claim 36 or 37, ***characterised in that*** information relating to a congestion forecast or other traffic-related variables is extracted and stored externally and a group can also be created within or externally to the system in order to acquire the relevant variables.

39. Method as claimed in one of claims 36 to 38, ***characterised in that*** the external data contain information relating to a traffic connection to other forms of traffic, such as railway, underground, streetcar, aircraft and/or shipping traffic.

40. Method as claimed in one of claims 10 to 39, ***characterised in that*** information relating to a congestion forecast based on events detected in the past and occurring on a cyclical basis is generated from vehicle data signals and transmitted and a group can also be initiated with a view to providing cyclical congestion forecasts.

41. Method as claimed in one of claims 10 to 40, ***characterised in that*** information relating to a congestion forecast based on events detected in the more recent past can be generated from vehicle data signals by extrapolating traffic flows or simulation and transmitted and a group can be initiated with a view to providing simulative congestion forecasts.

42. Method as claimed in one of claims 10 to 41, ***characterised in* that** the information relating to a congestion forecast and/or other traffic-related variables is stored within a fixed group of vehicles and continues to be stored there.

43. Method as claimed in one of claims 10 to 42, ***characterised in that*** relevant data is generated and/or transmitted if the first vehicle comes dangerously close to another vehicle belonging to the traffic routing system or to a group belonging to the traffic routing system.

44. Method as claimed in one of the preceding claims, ***characterised in that*** unanswered queries are returned in the form of specially tagged pseudo- responses.

45. Method as claimed in claim 44, ***characterised in that*** any failure to respond to a transmitted query is detected due to the fact that when a query is routed via a specific vehicle, a pseudo-response transmitted with a long time delay is simultaneously detected.

46. Method as claimed in claim 45, ***characterised in that*** the transmission of a pseudo-response by the specific vehicle is halted if another specific vehicle located within the range of the specific vehicle has itself responded to or forwarded the transmitted query, which will be detectable by the specific vehicle on the basis of an action code of the query.

47. Method as claimed in one of the preceding claims, ***characterised in that*** information returned or placed in a buffer memory of transmitting vehicles in response to queries is summarised so that data from a greater distance away from the query-instigator can be more highly compressed/more roughly resolved.

48. Method as claimed in one of the preceding claims, whereby transmitted data signals are forwarded, in the same way as queries are processed, both along a one-dimensional channel to a point of destination and across a two-dimensional area to a more extensive area of destination encoded in the data signal.

49. Method as claimed in one of the preceding claims, ***characterised in that*** data signals contain information generated by a vehicle on the basis of a specific event and are transmitted in a directed or non-directed manner.

50. Method as claimed in one of the preceding claims, ***characterised in that*** the vehicles are land-bound vehicles for road or rail transport, water-bound vehicles, aircraft or other mobile, manned or unmanned units, which move around in a commonly shared traffic space and which can be equipped with a communication system with a limited range.

51. Method as claimed in one of the preceding claims, ***characterised in that*** vehicles may also be special pseudo-vehicles which fulfil a special communicative function of extracting data signals from or inputting data signals to the traffic routing system and storing third-party data, and need not necessarily be mobile but must at least be equipped with a compatible communication system.

52. Method as claimed in claim 51, ***characterised in that*** a link to another telecommunications network can be established via a pseudo-vehicle or a station.

53. Method as claimed in claim 51 or 52, ***characterised in that*** pseudo-vehicles or stations linked via an external communication network are set up, which establish a better mutual connection between the vehicles or between the vehicles and a transmitter/receiver located outside the traffic routing system.

54. Telecommunications network, ***characterised in that*** it operates by a method as claimed in one of claims 51 to 53 and consists of the communication systems of the vehicles and/or the pseudo-vehicles.

55. System for detecting and optimising a route of a first vehicle belonging to a traffic routing system to which other vehicles belong, having:
a detection system for detecting local vehicle data to be transmitted;
a transmitter/receiver system for transmitting/receiving radio signals containing the respective vehicle data to be transmitted/received; and
a memory system for storing data;
***characterised by***
a field strength-setting system for freely setting a specific transmission field strength up to a maximum transmission field strength;
a field strength-detection system for detecting the field strength of the respective radio signals received;
a group setting-system, which fixes a group belonging to the first vehicle on receipt of the vehicle data from the respective vehicles;
a route fixing and segmenting-system, which fixes a route of the first vehicle from its instantaneous position to a selected destination and breaks it down into segments; and
a route optimisation system, which issues a query to the groups of vehicles on the basis of vehicle data containing information relating to traffic conditions on the respective route segments and specifies an optimised route based on vehicle data received in response to the query.

56. System as claimed in claim 55, ***characterised by** a* time delay signal-generating system which does not transmit a data signal until a fixed time delay dependent on a freely selectable time delay value has expired.

57. System as claimed in claim 55 or 56, ***characterised by*** a control system, by means of which transmission of the delayed data signal can be subsequently halted before the time delay has elapsed.

## Revendications

1. Procédé pour l'obtention de façon dynamique d'information significative de trafic et/ou pour l'optimisation de façon dynamique de l'itinéraire d'un premier véhicule appartenant à un système d'information de trafic à auto-organisation et/ou à un système d'acheminement de trafic à auto-organisation auquel appartiennent d'autres véhicules, comprenant les étapes suivantes effectuées par le premier véhicule :
[a] constitution de données propres sur la base de capteurs propres au véhicule et/ou d'autres sources d'information dans le premier véhicule ;
[b] émission de données significatives pour le premier véhicule ou pour d'autres véhicules ;
[c] réception de données émises par d'autres véhicules ;
[d] stockage de données obtenues à partir de données reçues et/ou de données propres ; et
[e] retransmission de données reçues en les renvoyant sous forme traitée ou non-traitée ;
**caractérisé par** l'étape suivante :
[f] constitution et émission de demandes concernant des données susceptibles d'être fournies par d'autres véhicules.

2. Procédé selon la revendication 1, **caractérisé en ce que** des réponses à des demandes, des réponses partielles à des demandes, une retransmission et/ou une retransmission partielle de demandes sont effectuée par des véhicules en réception.

3. Procédé selon la revendication 2, **caractérisé en ce que** des réponses à des demandes et/ou des retransmissions de demandes et d'autres données sont effectuées par des véhicules disposant d'un état d'information approprié/optimal ou étant positionnés à un endroit actuel approprié/optimal pour une retransmission.

4. Procédé selon la revendication 2 ou 3, **caractérisé en ce que** dans les étapes [a] et [d], des données d'historique de parcours sont également constituées par les véhicules.

5. Procédé selon la revendication 4, **caractérisé en ce que** dans les étapes [b] et [c], un groupe source de véhicules associé au premier véhicule est défini suite à la réception de données à partir de véhicules respectifs, les données étant stockées, accumulées et pré-traitées dans les véhicules récepteurs en vue d'une génération de données source pour les étapes suivantes.

6. Procédé selon la revendication 5, **caractérisé en ce qu'**il est possible, dans le pré-traitement des données source, de calculer des vitesses moyennes, des vitesses maximales, des grandeurs de densité de trafic, des sensibilités aux embouteillages, des grandeurs d'actualité groupées et/ou des grandeurs de pertinence groupées.

7. Procédé selon la revendication 5 ou 6, **caractérisé en ce que** la définition du groupe de véhicules est effectuée en définissant une puissance de champs d'émission réglable ou une portée d'émission du premier véhicule.

8. Procédé selon la revendication 7, **caractérisé en ce que** la puissance du champs d'émission réglable est réglée de manière à remplir au moyenne un critère prédéterminé relatif à un nombre paramétrisable de véhicules accessibles.

9. Procédé selon la revendication 8, **caractérisé en ce que** le réglage de la puissance du champs d'émission incorpore des positions et des puissances de champs d'émission utilisées de véhicules voisins, qui sont codées dans les signaux reçus.

10. Procédé selon l'une des revendications 5 à 9, **caractérisé en ce que** l'itinéraire du premier véhicule à partir de sa position momentanée vers une destination choisie est défini au moyen de données de trajet stockées et en divisant l'itinéraire en segments de trajet.

11. Procédé selon la revendication 10, **caractérisé en ce que** le premier véhicule émet des demandes d'information concernant une praticabilité et d'autres grandeurs significatives pour le trafic sur des segments de trajet candidats à parcourir par la suite.

12. Procédé selon la revendication 10 ou 11, **caractérisé en ce que** des réponses à des demandes en provenance du premier véhicule sont retournées directement ou retransmises vers le premier véhicule, les informations contenues dans les réponses étant également stockées, accumulées et traitées par des véhicules transmetteurs ainsi que par des véhicules qui reçoivent aussi les réponses, pour une utilisation ultérieure opportune.

13. Procédé selon la revendication 12, **caractérisé en ce que** les données d'historique de parcours, les données source, les données de stockage intermédiaire comportant, notamment, les informations stockées, accumulées et traitées, et des données de réponse sont stockées dans les véhicules, à chaque fois, sous la forme d'une structure cartographique individuelle qui se superpose à une structure cartographique globale et statique ou qui existe parallèlement à la structure cartographique statique.

14. Procédé selon la revendication 13, **caractérisé en ce que**, à partir de données d'état de parcours, de données d'historique du parcours et/ou des données obtenues en amassant des données de parcours de plusieurs véhicules, il est également possible de générer, modifier ou effacer des nouveaux éléments de structures cartographiques dans les structures cartographiques individuelles, et aussi de les extraire du système d'acheminement de trafic pour une utilisation externe.

15. Procédé selon la revendication 13 ou 14, **caractérisé en ce qu'**one effectue une division de la structure cartographique individuelle en segments de trajet en vue d'un traitement interne et d'un référencement dans les signaux de transmission, lesquels segments de trajet remplissent un critère prédéterminé concernant une longueur.

16. Procédé selon la revendication 15, **caractérisé en ce qu'**on rassemble des segments de trajet de la structure cartographique individuelle en groupes et surgroupes avec, à chaque fois, une propre identification, en vue d'un traitement interne et d'un référencement dans des signaux de transmission.

17. Procédé selon l'une des revendication 13 à 16, **caractérisé en ce qu'**un premier calcul de l'itinéraire du premier véhicule à partir de sa position momentanée vers une destination choisie est effectué au moyen de données dynamiques de trajet qui sont stockées de manière statique ou sont déjà disponibles.

18. Procédé selon la revendication 17, **caractérisé en ce qu'**un nouveau calcul de l'itinéraire à cause de données ayant changées dans la structure cartographique individuelle est effectué en vue d'une optimisation itérative de l'itinéraire.

19. Procédé selon l'une des revendications 12 à 18, **caractérisé en ce qu'**au cours de la constitution de demandes, une actualité souhaitée est introduite dans la demande par codage.

20. Procédé selon la revendication 19, **caractérisé en ce qu'**une réponse à une demande est effectuée, selon l'actualité souhaitée, à partier de données source de véhicules proches de la région de destination, ou à partir de données de stockage intermédiaire comportant notamment des informations stockées, accumulées ou traitées de véhicules loin de la région de destination et plus proche du véhicule qui formule la demande.

21. Procédé selon la revendication 19 ou 20, **caractérisé en ce qu'**un véhicule approprié du groupe de véhicules, qui est susceptible de répondre à et/ou transmettre la demande, est déterminé au moyen d'un procédé d'évaluation, où il est possible de déterminer une grandeur d'évaluation selon l'actualité ou une pertinence de données déjà disponibles pour le véhicule respectif et concernant des segments de trajet concernés, selon la nombre de demandes auxquelles il est possible de répondre sur la base de données déjà disponibles, et/ou selon la distance qui sépare le véhicule respectif, à la demande duquel il n'est pas possible de répondre, du prochain segment de trajet.

22. Procédé selon la revendication 21, **caractérisé en ce qu'**un temps de retard est défini, selon la grandeur d'évaluation, pour l'envoi d'une réponse et/ou retransmission ; lequel temps de retard étant d'autant plus courte que la grandeur d'évaluation est élevée, de sorte que le tour d'émettre est plus tôt pour les véhicules ayant meilleurs grandeurs d'évaluation.

23. Procédé selon la revendication 22, **caractérisé en ce qu'**un véhicule déterminé avec une intention d'émettre concernant une réponse à une demande et/ou une retransmission d'une demande relative à une demande déterminée et **caractérisée par** un code d'action, arrête l'émission envisagée lorsqu'il reçoit un signal relatif à la même demande et ayant le même code d'action à partir d'un autre véhicule déterminé qui a précédé le véhicule déterminé avec un temps de retard plus court.

24. Procédé selon l'une des revendications 18 à 23, **caractérisé en ce qu'**une évaluation est effectuée concernant la nécessité de constituer une demande pour un segment de trajet déterminé.

25. Procédé selon la revendication 24, **caractérisé en ce que** la nécessité d'établir une demande pour un segment de trajet déterminé est évaluée selon la distance du segment de trajet d'un endroit momentané du premier véhicule, le temps estimé pour atteindre le segment de trajet, un facteur de pondération du segment de trajet, une fréquence d'embouteillage connue du passé et/ou l'actualité des données déjà disponibles sur le segment de trajet.

26. Procédé selon l'une des revendications 10 à 25, **caractérisé en ce que** des données transmises comportent, à titre de liste d'historique, des informations relatives à un type de signal, une identification de véhicule, la puissance de champs d'émission utilisée, un endroit des véhicules, un code d'action sans ambiguïté, ainsi qu'une liste d'identifications de véhicules de transmission utilisés auparavant.

27. Procédé selon l'une des revendications 10 à 26, **caractérisé en ce que** des données transmises comportent des informations relatives à des identifications de segments de trajet, une direction de déplacement, une proportion d'un segment de trajet parcouru, une vitesse moyenne, une vitesse maximale, la densité de véhicules et/ou une actualité/marquage de temps des informations.

28. Procédé selon la revendication 27, **caractérisé en ce qu'**une réponse à une demande est retournée en utilisant la liste d'historique.

29. Procédé selon la revendication 26 ou 27, **caractérisé en ce ququ**'une réponse à une demande est retournée au moyen d'un procédé de retransmission analogue à la transmission vers l'avant de la demande.

30. Procédé selon l'une des revendications 10 à 29, **caractérisé en ce que** le premier véhicule constitue et transmet une pluralité de demandes relatives à des segments de trajet individuels, où les réponses aux demandes sont, à chaque fois, données de façon individuelle et/ou les demandes sont retournées avec une réponse de façon individuelle; ou le premier . véhicule établit et transmet une demande relative à la totalité des segments de trajet, la demande relative à la totalité des segments de trajet comportant une pluralité de demandes partielles relatives à des segments de trajet individuels, où les véhicules d'une chaîne de véhicules de transmission, l'un après l'autre, répondent ou transmettent ces demandes partielles.

31. Procédé selon l'une des revendications 10 à 30, **caractérisé par** la formation d'un groupe ou de plusieurs groupes de véhicules qui comportent à chaque fois des données de segments de trajet déterminés voisins, où des données significatives de groupe communes sont disponibles pour des véhicules respectifs, de sorte que chaque véhicule du groupe peut répondre à une demande sur les données d'un tel groupe ou une réponse peut être donnée avec peu de retransmissions.

32. Procédé selon la revendication 31, **caractérisé par** la formation, à partir de ces groupes, d'une ou de plusieurs surgroupes qui comportent, à chaque fois, des données de segments de trajet déterminés voisins, où des données communes aux véhicules respectifs et significatives de surgroupes sont disponibles de sorte que chaque véhicule de tels surgroupes peut répondre à une demande concernant les données du surgroupe ou une réponse peut être donnée avec peu de retransmissions.

33. Procédé selon la revendication 31 ou 32, **caractérisé en ce que** des véhicules du groupe constituent et émettent des données comportant des informations relatives à une position, étendue et durée de vie minimale du groupe.

34. Procédé selon l'une des revendications 31 à 33, **caractérisé en ce que** des données de groupe comportent des vitesses moyennes, vitesses maximales, grandeurs de densité de véhicules, actualités/marquages de temps et/ou des grandeurs de pertinence d'information relatives à la totalité des véhicules du groupe.

35. Procédé selon l'une des revendications 31 à 34, **caractérisé en ce que** la formation d'un groupe est effectuée en accumulant des souhaits de formation de groupe d'un ou plusieurs véhicules ou sous-groupes et en définissant la formation de groupe effective seulement lorsqu'une valeur de seuil est dépassée.

36. Procédé selon l'une des revendications 10 à 35, **caractérisé en ce que** des données externes sont fournies à un véhicule ou un groupe de véhicules pour une retransmission de façon orientée ou non orientée, où il est également possible de provoquer la formation d'un groupe par ces données externes.

37. Procédé selon la revendication 36, **caractérisé en ce que** les données externes comportent des informations relatives à une prévision d'embouteillage.

38. Procédé selon la revendication 36 ou 37, **caractérisé en ce que** des informations relatives à une prévision d'embouteillage ou à autres grandeurs significatives de trafic sont extraits et stockées de façon externe, où il est également possible de provoquer la formation d'un groupe à partir de l'intérieur ou de l'extérieur du système pour obtenir les grandeurs significatives.

39. Procédé selon l'une des revendications 36 à 38, **caractérisé en ce que** les données externes comportent des informations relatives à une liaison de transport à d'autres systèmes de transport, comme les chemins de fer, le métro, le RER, le transport aérien et/ou le transport par eau.

40. Procédé selon l'une des revendications 10 à 39, **caractérisé en ce que** des informations relatives à une prévision d'embouteillage basée sur des événements détectés dans le passé et apparus de façon cyclique sont générées à partir de signaux de données de véhicules et émises, où il est également possible de provoquer la formation d'un groupe en vue d'une prévision cyclique d'embouteillages.

41. Procédé selon l'une des revendications 10 à 40, **caractérisé en ce que** des informations relatives à une prévision d'embouteillage basée sur des événements détectés dans le passé proche sont générées à partir de signaux de données de véhicules par extrapolation des flux de trafic ou par simulation et émises, où il est également possible de provoquer la formation d'une groupe en vue d'une prévision d'embouteillages simulative.

42. Procédé selon l'une des revendications 10 à 41, **caractérisé en ce que** les informations relatives à une prévision d'embouteillage et/ou d'autres grandeurs significatives pour le trafic sont stockées à l'intérieur d'un groupe à définir de véhicules et continuent d'exister à l'intérieur dudit groupe.

43. Procédé selon l'une des revendications 10 à 42, **caractérisé en ce que** des données relatives à un rapprochement dangereux du premier véhicule d'un autre véhicule appartenant au système d'acheminement de trafic ou d'un groupe appartenant au système d'acheminement de trafic sont générées et/ou transmises.

44. Procédé selon l'une des revendications précédentes, **caractérisé en ce que** les demandes ayant restées sans réponse sont retournées sous forme de pseudo-réponses marquées de façon spécifique.

45. Procédé selon la revendication 44, **caractérisé en ce que** l'absence de réponse à une demande retransmise est détectée en définissant, pour une retransmission d'une demande par un véhicule déterminé, en même temps l'émission d'une pseudo-réponse avec un temps de délai important.

46. Procédé selon la revendication 45, **caractérisé en ce que** l'émission de la pseudo-réponse à partir du véhicule déterminé est arrêté par le fait qu'un autre véhicule déterminé qui se trouve à la portée du véhicule déterminé répond ou transmet à son tour la demande retransmise, ce que le véhicule déterminé peut reconnaître sur la base d'un code d'action de la demande.

47. Procédé selon l'une des revendications précédentes, **caractérisé en ce que** des informations sont rassemblées dans des véhicules transmetteurs au cours du retour de réponses à des demandes ou au cours d'un stockage intermédiaire, de sorte qu'une compression plus forte/résolution plus grosse peut être effectuée par un demandeur sur des données à grande distance.

48. Procédé selon l'une des revendications précédentes, **caractérisé en ce que** des signaux émis de données sont retransmises, de façon analogue aux traitement des demandes, non seulement le long d'un canal unidimensionnel vers un endroit de destination mais aussi de façon bidimensionnelle vers une région de destination plus spacieuse codée dans un signal de données.

49. Procédé selon l'une des revendications précédentes, **caractérisé en ce que** les signaux de données comportent des informations qui sont établies à cause d'événements spécifiques et émises de façon orientée ou non orientée par un véhicule.

50. Procédé selon l'une des revendications précédentes, **caractérisé en ce que** les véhicules sont des véhicules terrestres pour le transport routier ou ferroviaire, des véhicules nautiques, des véhicules aériens ou d'autres unités mobiles, pilotés ou non pilotés, qui se déplacent dans un espace de transport utilisé en commun et qui sont susceptibles d'être pourvus d'un dispositif de communication à portée limitée.

51. Procédé selon l'une des revendications précédentes, **caractérisé en ce que** les véhicules peuvent être également des pseudo-vehicules spéciales qui présentent un but à des fins de communications, émettent des signaux de données vers l'extérieur ou vers l'intérieur du système d'acheminement de trafic, introduisent des données tiers, ne doivent pas être absolument mobiles, mais sont au moins pourvus d'un dispositif de communication compatible.

52. Procédé selon la revendication 51, **caractérisé en ce qu'**une liaison vers un autre réseau de télécommunication est établie par l'intermédiaire d'un pseudo-véhicule ou d'une station.

53. Procédé selon la revendication 51 ou 52, **caractérisé par** la création de pseudo-véhicules ou stations qui sont liés entre eux par un réseau de télécommunication externe et qui établissent une liaison plus favorable entre les véhicules ou entre les véhicules et un émetteur/récepteur se trouvant à l'extérieur du système d'acheminement de trafic.

54. Réseau de télécommunication, **caractérisé en ce qu'**il met en oeuvre un procédé selon l'une des revendications 51 à 53, et **en ce qu'**il est formé par les dispositifs de communication des véhicules et/ou des pseudo-véhicules.

55. Dispositif pour l'obtention et l'optimisation d'un itinéraire d'un premier véhicule appartenant à un système d'acheminement de trafic auquel appartiennent d'autres véhicules, avec :
un dispositif de détection destiné à détecter des données locales de véhicule à émettre ;
un dispositif d'émission/réception destiné à émettre/recevoir des signaux de radiofréquence comportant les données de véhicule respectives à émettre/recevoir; et
un dispositif de stockage destiné à stocker des données ;
**caractérisé par** :
un dispositif de réglage de la puissance de champs, destiné à régler de façon libre une puissance de champs d'émission déterminée jusqu'à une puissance de champs d'émission maximale ;
un dispositif de détection de puissance de champs destiné à détecter la puissance de champs des signaux de radiofréquence reçus respectives ;
un dispositif de définition de groupe qui définit un groupe appartenant au premier véhicule suite à la réception des données de véhicule des véhicules respectifs ;
un dispositif de définition et de segmentation d'itinéraire qui définit un itinéraire du premier véhicule à partir de sa position momentanée jusqu'à une destination choisie au moyen de données de trajet stockées et le divise en segments de trajet ; et
un dispositif d'optimisation d'itinéraire qui formule une demande à destination du groupe de véhicules sur des données de véhicules qui comportent des informations relatives à la praticabilité du segment de trajet respectif, et qui définit un itinéraire optimisé au moyen de données de véhicules reçues en réponse à la demande.

56. Dispositif selon la revendication 55, **caractérisé par** un dispositif de génération de signaux de temps de retard, lequel dispositif émet un signal de données selon une valeur de temps de retard susceptible d'être définie librement, seulement lorsque le temps de retard établi s'est écoulé.

57. Dispositif selon la revendication 55 ou 56, **caractérisé par** un dispositif de commande au moyen duquel il est possible d'arrêter ultérieurement, avant l'écoulement du temps de retard, l'émission du signal de données retardé.
